# EUROPEAN PATENT APPLICATION

(11) **EP 1 863 307 A1**
(43) Date of publication of application: **05.12.2007**
(21) Application number: 06714381.8
(22) Date of filing: 23.02.2006
(51) Int. Cl.: H04Q 7/38

(54) **DATA COMMUNICATION TERMINAL, RADIO BASE STATION SEARCHING METHOD, AND PROGRAM**

(30) Priority: 28.02.2005 JP 2005052183
(71) Applicant: Seiko Instruments R&D Center Inc., Chiba-shi, Chiba 261-8507 (JP); Vodafone K.K., Tokyo 105-6205 (JP)
(72) Inventor: KOYAMA, Kazuhiro, ama-ku, Chiba-shi Chiba, 2618507 (JP); KANAYA, Haruo, ama-ku, Chiba-shi Chiba, 2618507 (JP); MIYAZAKI, Shinichi, ama-ku, Chiba-shi Chiba, 2618507 (JP); MATSUI, Takayuki, ama-ku, Chiba-shi Chiba, 2618507 (JP); WATANABE, Fukuzo, Minato-ku, Tokyo (JP)
(74) Representative: Cloughley, Peter Andrew
(86) International application number: PCT/JP2006/303241
(87) International publication number: WO 2006/093008

(57) **Abstract**

By a search frequency information acquisition processing unit (11), search frequency setting information of a radio base station is received from a PC (30), and a condition such as a country name or the like is stored in a user setting information storage memory (21) whereas the frequency information to be used in that country is stored in a frequency information table (22). On the basis of the information of the search frequency stored in the user setting information storage memory (21) and the frequency information table (22), a surrounding radio base station is searched by a radio base station search processing unit (14).

## Description

### Technical Field

The present invention relates to a data communication terminal, a radio base station searching method, and a program, and more particularly to a data communication terminal, a radio base station searching method, and a program capable of quickly completing radio base station search and selection processing when a data communication terminal is connected to an information device such as a PC or a PDA and used as a modem.

### Background Art

W-CDMA mobile communication standard has been globally standardized by a third-generation mobile communication system standardization project called 3GPP. A frequency band used in a W-CDMA system is standardized in countries with the aim of enabling the use of W-CDMA terminals all over the world.

Actual assignment of a frequency band to each provider is determined by a radio wave communication management organization of each country. A particular frequency bandwidth in the W-CDMA frequency band is assigned to each provider, in each country. Each provider determines one or more frequencies to be used for base stations, within the assigned frequency band, and installs the respective base stations.

A W-CDMA terminal performs processing of searching and selecting the W-CDMA frequency band for a base station of the provider to which the user of the W-CDMA terminal subscribes. For the base station search and selection processing, a method is conceivable in which report information sent from each base station is received at each sampling frequency within the whole standardized frequency band, it is determined from the report information whether the base station is one of base stations of the provider to which the user of the W-CDMA terminal subscribes, and the base station is selected when the determination is affirmative.

The whole frequency search and selection processing can be easily found because of the following points. First, although a frequency used by base stations of each provider is known, the frequency may be changed and a new frequency may be added in the future. Second, when the W-CDMA terminal is used in a foreign country, a frequency used by base stations of a provider which is allowed for roaming in the country is different from the frequency that is used by base stations in the home country.

Incidentally, when a data communication card terminal (data communication terminal) employing the W-CDMA system is connected to a PC, a PDA, or the like and used as a standard modem, power feeding to the data communication card terminal is started at the same time as the start of a dial-up connection operation. If the base station search and selection processing is not completed within about one minute, which is required for the power feeding (which is different depending on the OS to be used), time out occurs. It is better for the connection to be completed in a shorter period of time when the characteristic of the data communication card terminal is considered. However, the above-mentioned method of searching the whole W-CDMA frequency band may take an enormous amount of time depending on the situation and time out may occur.

Examples of conventional techniques related to the present invention include a base radio unit and a mobile radio unit capable of efficiently searching for a frequency to be used to transmit a position registration request (see Patent Document 1, for example). In this conventional technique, the mobile radio unit includes a memory for storing a transmission and reception frequency which was used previously and a downlink frequency which is used by a surrounding base radio unit, a ROM for storing a plurality of frequencies at which the mobile radio unit is allowed to transmit and receive data, and a determination section for determining whether a frequency to be used by the mobile radio unit for transmission and reception is available by comparing the frequencies stored in the memory with the frequencies stored in the ROM. The mobile radio unit sequentially switches among the reception frequency which was usedpreviously, the downlink frequency which is used by a surrounding base radio unit, and an allowed receiving frequency, receives an uplink frequency notified by the base radio unit, and, only when the uplink frequency is allowed to use, transmits a position registration request.

However, the conventional technique aims at efficiently searching for, while obtaining information on a downlink frequency used by a surrounding base station from the base station with which communication is currently being made, a frequency to be used to transmit a position registration request, based on the information. Thus, the object and the configuration of the conventional technique differ fromthose of the present invention aiming at quickly searching for a radio base station with which communication can be made for the first time after the data communication card terminal (data communication terminal) is activated.
Patent Document 1: JP 2000-175254 A
As described above, there is a problem in that, in a case where the data communication terminal such as a data communication card is connected to a PC, a PDA, or the like and used as a modem, and the base station search and selection processing is not completed within a predetermined period of time after the dial-up connection operation is started, time out occurs. Further, there is a problem in that when a method of searching the whole frequency band of the W-CDMA system is used, for example, in international roaming, an enormous amount of time is required depending on the situation and time out occurs.

### Disclosure of the Invention

The present invention has been made to solve the above-mentioned problems, and therefore has an object to provide a data communication terminal, a radio base station searching method, and a program capable of, when a data communication terminal is connected to an information device such as a PC or a PDA and used as a standard modem, quickly completing radio base station search and selection processing and preventing time out from occurring even in roaming.

The present invention has been made to solve the above-mentioned problems, and the invention provides a data communication terminal connected to an information device body and used as a modem for performing communication between the information device body and a surrounding radio base station, the data communication terminal including:
search frequency information acquisition means for receiving search frequency setting information of a radio base station from the information device body side;
setting data storage means for storing the search frequency setting information received by the search frequency information acquisition means;
search frequency development means for determining a frequency to be searched for based on the search frequency setting information stored by the setting data storage means; and
radio base station search means for searching for a radio base station at the frequency determined by the search frequency development means.

Accordingly, the radio base station search and selection processing can be quickly completed by limiting the frequency to be searched for.

Further, in the data communication terminal according to the present invention:
the search frequency setting information includes information on one or more fixed frequencies; and
the search frequency development means determines the search frequency based on the one or more fixed frequencies.

Accordingly, the radio base station search and selection processing can be quickly completed by limiting frequencies to be searched for.

Further, in the data communication terminal according to the present invention:
the search frequency setting information includes information on a limited frequency range defined by a lower frequency limit and an upper frequency limit of frequencies to be searched for; and
the search frequency development means determines the search frequency based on the information on the limited frequency range.

Accordingly, the radio base station search and selection processing can be quickly completed by limiting frequencies to be searched for.

Further, in the data communication terminal according to the present invention:
the search frequency setting information includes the information on the limited frequency range defined by the lower frequency limit and the upper frequency limit of the frequencies to be searched for and the information on the one or more fixed frequencies;
the search frequency development means determines the search frequency based on the information on the limited frequency range and the information on the one or more fixed frequencies; and
the radio base station search means first performs a search operation at the one or more fixed frequencies, and performs a search operation in the limited frequency range when the search processing has not been successfully performed at the one or more fixed frequencies.

Accordingly, the radio base station search and selection processing can be quickly completed by limiting the frequencies to be searched for, and a probability of success in radio base station search processing is increased.

Further, in the data communication terminal according to the present invention:
the search frequency setting information includes information on a frequency of a radio base station which is not to be searched for; and
the search frequency development means determines the search frequency by excluding the frequency which is not to be searched for.

Accordingly, the radio base station search and selection processing can be quickly completed by limiting the frequencies to be searched for, and a connection to a radio base station of a provider (for example, a provider to which a user of the terminal does not subscribe) with which a connection is not desired can be avoided.

Further, in the data communication terminal according to the present invention:
the search frequency setting information includes information on multiple limited frequency ranges each of which is defined by a lower frequency limit and an upper frequency limit of frequencies to be searched for and information on a search order of the multiple limited frequency ranges;
the search frequency development means determines the search frequency and a search order based on the information on the multiple limited frequency ranges and the information on the search order; and
the radio base station search means performs a search operation in the multiple limited frequency ranges in accordance with the search order.

Accordingly, the search and selection processing for a radio base station which is allowed to be used in multiple countries can be quickly completed while the frequencies to be searched for are limited.

Further, in the data communication terminal according to the present invention:
the search frequency setting information includes information on multiple limited frequency ranges each of which is defined by a lower frequency limit and an upper frequency limit of frequencies to be searched for, information on a search order of the multiple limited frequency ranges, and information on the one or more fixed frequencies;
the search frequency development means determines the search frequency and a search order based on the information on the search order, the multiple limited frequency ranges, and the one or more fixed frequencies; and
the radio base station search means first performs a search operation at the one or more fixed frequencies, and performs a search operation in the multiple limited frequency ranges in accordance with the search order when the search processing has not been successfully performed at the one or more fixed frequencies.

Accordingly, the search and selection processing for a radio base station which is allowed to be used in multiple countries can be quickly completed while the frequencies to be searched for are further limited.

Further, in the data communication terminal according to the present invention, search processing is sequentially performed in the multiple limited frequency ranges in accordance with the information on the search order, and, when the search processing is successfully performed at a first time, the information on the search order of the multiple limited frequency ranges is rewritten and stored such that the search order of the limited frequency range in which the search processing is successfully performed is placed at the top of the search order.
Accordingly, the search and selection processing of a radio base station which is allowed to be used in multiple countries can be quickly completed while the frequencies to be searched for are limited.

Further, in the data communication terminal according to the present invention:
setting information on an identification condition of a country name or the like, and setting information on the identification condition and a search frequency corresponding to the identification condition are selected and used as the search frequency setting information;
the setting data storage means includes a user setting information storage memory for storing the identification condition of a country name or the like, and a frequency information table for storing the search frequency setting information corresponding to the identification condition; and
the search frequency development means references the identification condition of a country name or the like, which is set in the user setting information storage memory, and determines the search frequency based on frequency information corresponding to the identification condition, which is stored in the frequency information table.

Accordingly, in roaming, the radio base station search and selection processing can be quickly completed by limiting the frequencies to be searched for by a simple setting (for example, a country name).

Further, the data communication terminal according to the present invention further includes:
command interpretation means for interpreting commands for updating, adding, and deleting frequency setting information, which are sent from the information device body,
in which the frequency setting information stored in the setting data storage means is updated, added, or deleted based on a command interpretation result obtained by the command interpretation means.

Accordingly, the search frequency setting information stored in the data communication terminal can easily be changed through an operation performed in the information device body.

Further, according to the present invention, a radio base station searching method, which is used in a data communication terminal connected to an information device body and used as a modem for performing communication between the information device body and a surrounding radio base station, includes:
a search frequency information acquisition procedure of receiving search frequency setting information of a radio base station from the information device body side;
a setting data storage procedure of storing the search frequency setting information received in the search frequency information acquisition procedure;
a search frequency development procedure of determining a frequency to be searched for based on the search frequency setting information stored in the setting data storage procedure; and
a radio base station search procedure of searching for a radio base station at the frequency determined in the search frequency development procedure.

Accordingly, the radio base station search and selection processing can be quickly completed by limiting frequencies to be searched for.

Further, a computer program according to the present invention is a program for causing a computer of a data communication terminal connected to an information device body and used as a modem for performing communication between the information device body and a surrounding radio base station, to execute:
a search frequency information acquisition procedure of receiving search frequency setting information of a radio base station from the information device body side;
a setting data storage procedure of storing the search frequency setting information received in the search frequency information acquisition procedure;
a search frequency development procedure of determining a frequency to be searched for based on the search frequency setting information stored in the setting data storage procedure; and
a radio base station search procedure of searching for a radio base station at the frequency determined in the search frequency development procedure.

The present invention has been made to solve the above-mentioned problems. The data communication terminal according to the present invention is configured such that the search frequency setting information of a radio base station is received from the information device body, the received search frequency setting information is stored in the terminal, a frequency to be searched for is determined based on the search frequency setting information, and the radio base station search is performed. Accordingly, the radio base station search and selection processing can be quickly completed.

Further, the data communication terminal according to the present invention is configured such that information on a fixed frequency is set as the search frequency setting information and the search operation is performed at the fixed frequency. Accordingly, the radio base station search and selection processing can be quickly completed.

Further, in the data communication terminal according to the present invention, the search frequency setting information includes the limited frequency range defined by a lower frequency limit and an upper frequency limit of frequencies to be searched for and the search operation is performed in the limited frequency range. Accordingly, the radio base station search and selection processing can be quickly completed by limiting a frequency range to be searched.

Further, the data communication terminal according to the present invention is configured such that both the limited frequency range and the fixed frequency are set as the search frequency setting information, a search operation is first performed at the fixed frequency, and, when the search operation has not been successfully performed at the fixed frequency, a search operation is performed in the limited frequency range. Accordingly, the radio base station search and selection processing can be quickly completed by limiting frequencies to be searched for, and a probability of success in radio base station search processing is increased.

Further, the data communication terminal according to the present invention is configured such that information on the frequency of a radio base station which is not to be searched for can be specified in the search frequency setting information. Accordingly, the radio base station search and selection processing can be quickly completed by limiting frequencies to be searched for, and a connection to a radio base station of a provider (for example, a provider to which a user of the terminal does not subscribe) with which a connection is not desired can be avoided.

Further, the data communication terminal according to the present invention is configured such that an identification condition such as a country name, and frequency information corresponding to the identification condition can be independently set as the search frequency setting information, and, by just specifying the identification condition such as a country name, a search frequency corresponding to the country name can be determined. Accordingly, in roaming, the radio base station search and selection processing can be quickly completed by limiting frequencies to be searched for by a simple setting (for example, a country name).

Further, the data communication terminal according to the present invention is configured such that commands for updating, adding, and deleting frequency setting information which are sent from the information device body are interpreted to update, add, or delete the frequency setting information. Accordingly, the search frequency setting information stored in the data communication terminal can easily be changed through an operation performed in the information device body.

### Brief Description of the Drawings

FIG. 1 is a diagram showing a hardware configuration example of a data communication terminal according to the present invention.
FIG. 2 is a diagram showing a use example of a conventional data communication card.
FIG. 3 is a diagram showing a relationship between a frequency and an electric field intensity in the example shown in FIG. 2.
FIG. 4 is a diagram showing an example of a conventional search frequency range.
FIG. 5 is a diagram showing an example of a limited frequency search range according to the present invention.
FIG. 6 is a diagram showing an example of fixed-frequency search according to the present invention.
FIG. 7 is a flowchart showing an outline of a conventional search procedure.
FIG. 8 is a flowchart showing the conventional search procedure.
FIG. 9 is a flowchart showing an outline of a search procedure according to the present invention.
FIG. 10 is a diagram showing a first data structure example of a frequency information table.
FIG. 11 is a diagram showing a second data structure example of the frequency information table.
FIG. 12 is a diagram showing a third data structure example of the frequency information table.
FIG. 13 is a flowchart showing a detailed procedure of fixed-frequency search processing according to the present invention.
FIG. 14 is a flowchart showing a procedure of combination search processing according to a second embodiment of the present invention.
FIG. 15 is a flowchart showing a procedure of performing search processing while specifying a radio base station of a provider which refuses a connection, according to a third embodiment of the present invention.
FIG. 16 is a diagram showing a first structure example of a database developed in a RAM.
FIG. 17 is a diagram showing a second structure example of the database developed in the RAM.
FIG. 18 is a diagram showing an example of a device configuration for updating data, according to the present invention.
FIG. 19 is a diagram showing example commands for updating data.
FIG. 20 is a diagram showing an example of processing of a "SET_CODE" command.
FIG. 21 is a diagram showing an example of processing of an "ADD_DATA" command.
FIG. 22 is a diagram showing an example of processing of a "DEL_DATA" command.
FIG. 23 is a diagram showing a second hardware configuration example of a data communication terminal according to the present invention.
FIG. 24 is a diagram showing a first data structure example of a search order and frequency information memory.
FIG. 25 is a diagram showing an example of multiple limited frequency search ranges according to the present invention.
FIG. 26 is a flowchart showing an outline of a search procedure according to a fourth embodiment of the present invention.
FIG. 27 is a flowchart showing an outline of a search procedure according to a fifth embodiment of the present invention.
FIG. 28 is a diagram showing a second data structure example of the search order and frequency information memory.
FIG. 29 is a diagram showing a third hardware configuration example of a data communication terminal according to the present invention.
FIG. 30 is a flowchart showing an outline of a search procedure according to a sixth embodiment of the present invention.

### Best Modes for carrying out the Invention

Next, best modes for carrying out the present invention will be described with reference to the drawings.

First, a description is given of an outline of a data communication terminal and a base station searching method according to the present invention.

A provider allowed for roaming in a foreign country where a data communication terminal (such as a data communication card terminal) for a W-CDMA system or the like is used is specified by the provider to which a user of the W-CDMA terminal subscribes, and a frequency band to be used or a frequency used by a base station is known.

Therefore, the frequency used by base stations of the roaming-destination provider is included only within the frequency band assigned to the provider. When frequency bands to be searched by the data communication terminal are limited to the frequency band assigned to the provider, a reduction in search time can be achieved. Alternatively, when a frequency to be searched for is fixed, a reduction in search time can be achieved.

For example, when the user uses the data communication terminal in Great Britain, information indicating that the data communication terminal is used in Great Britain is passed to the data communication terminal by a command. Based on this country name information, the data communication terminal can retrieve provider base-station frequency information (frequency band or frequency itself) of each country, stored in the data communication terminal in advance, and limit the frequency band to be searched or the frequency to be searched for.

The provider base-station frequency information (frequency band or frequency itself) of each country is held in the data communication terminal, and a mechanism is provided which is capable of updating base-station frequency information (frequency band or frequency itself) of the roaming-destination provider by a command.

The present invention has the followingmodes of a search operation, a search data specifying method, and the content of search data used in the data communication terminal, and the modes are used in combination.

As a first search operation, searching is performed only at several fixed predetermined frequencies.

As a second search operation, after searching is performed only at several fixed predetermined frequencies, a predetermined frequency range is searched, and, if desired, the whole frequency range is further searched. As an option, a frequency range where searching is not performed can be set.

Next, a concrete configuration example and an operation according to an embodiment of the present invention will be described.

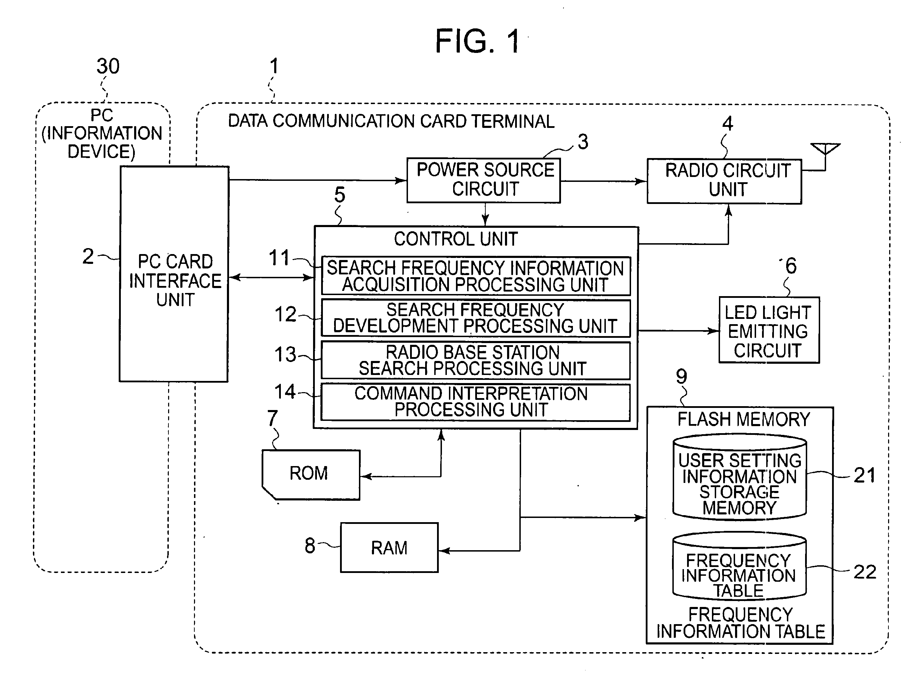

FIG. 1 is a diagram showing a hardware configuration example of a data communication terminal according to the present invention. FIG. 1 shows an example of a data communication card terminal. A data communication card terminal 1 shown in FIG. 1 includes a PC card interface unit 2 for connecting to a PCMCIA slot or a USB terminal of a PC (information device) 30, a power source circuit 3 for supplying power to the card, a radio circuit unit 4 for communicating with a base station, a control unit 5 for controlling an operation of the entire card, an LED light emitting circuit 6 for displaying an operation state of the card with a luminescent color, and a ROM 7, a RAM 8, and a flash memory 9 for storing a program and data necessary for a card operation.

The control unit 5 includes a search frequency information acquisition processing unit (search frequency information acquisition means) 11 for receiving setting information (or update information or delete information) for search frequency from the PC 30 and performing storing (or updating or deleting) processing with respect to a user setting information storage memory 21 and a frequency information table 22 which are included in the flash memory 9, a search frequency development processing unit 12 for determining search frequency information based on the acquired search frequency setting information and developing the search frequency information on the RAM 8, a radio base station search processing unit (radio base station search means) 13 for performing radio base station search processing by controlling the radio circuit unit 4, and a command interpretation processing unit (command interpretation means) 14 for interpreting a command for the search frequency setting information, sent from the PC. Note that operations of those units will be described later.

The user setting information storage memory 21 stores a search target condition, for example, country name information. The frequency information table 22 stores information on search target frequency (for example, frequency information for each country name). Note that the data structures of the user setting information storage memory 21 and the frequency information table 22 will be described later.

Before a description is given of a search operation performed in the data communication terminal of the present invention, an example of a conventional search operation will be described for comparison with the present invention.

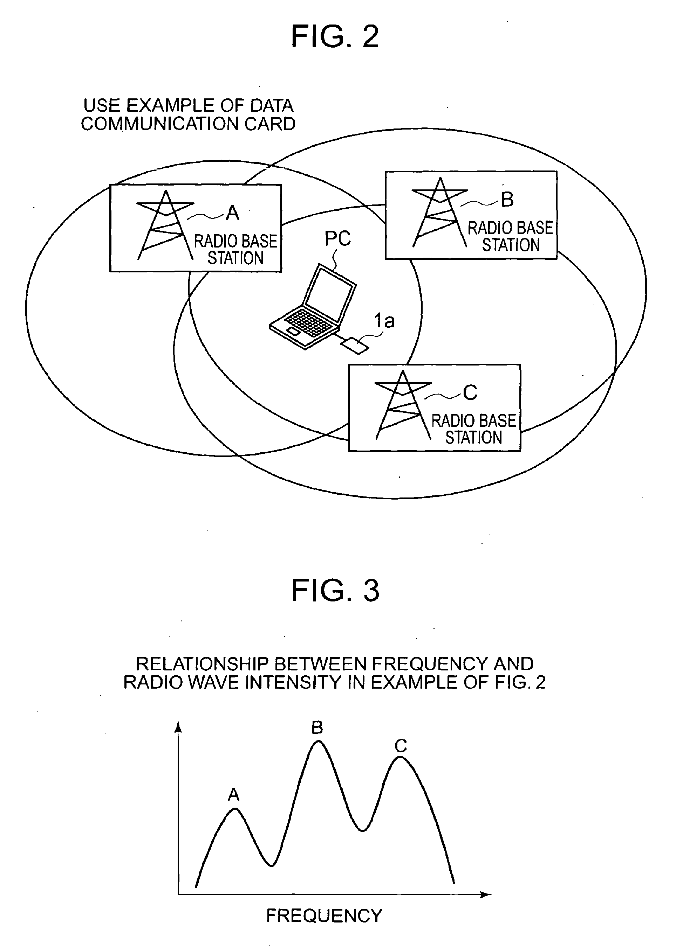

FIGS. 2 to 4 are diagrams for explaining a conventional data communication card terminal. It is assumed that, as shown in FIG. 2, there are base stations A, B, and C around a PC to which a conventional data communication card terminal 1a is inserted, and, as shown in FIG. 3, at the data communication card terminal 1a, the radio wave intensity of the base station B is the highest, that of the base station C is the second highest, and that of the base station A is the lowest.

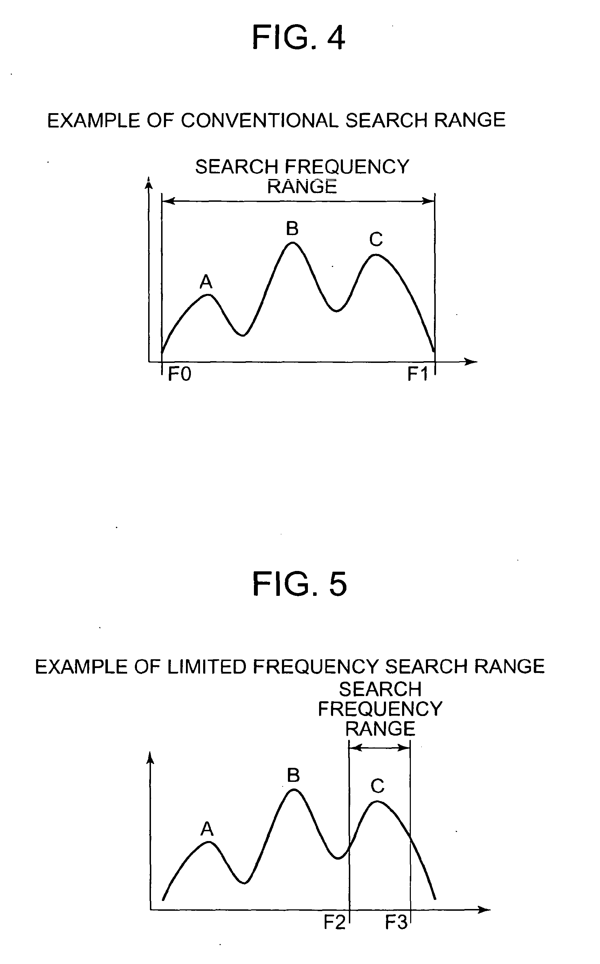

In this case, in the search operation performed in the conventional data communication card terminal 1a, as shown in FIG. 4, the whole frequency range defined by the W-CDMA system or the like (for example, in foreign countries, the whole frequency band assigned to each area such as Europe or North America) is searched. Specifically, the whole frequency range from the lower frequency limit F0 to the upper frequency limit F1, defined by the W-CDMA system or the like, is searched, and a radio base station whose radio wave intensity allows communication and which is found first (for example, when searching is performed from F0 to F1, the base station A, and, when searching is performed from F1 to F0, the base station C) is usually selected and connected for communication.

On the other hand, in the data communication card terminal 1 of the present invention, fixed frequencies or a limited frequency range to be searched is stored in advance in the user setting information storage memory 21 and the frequency information table 22, and a radio base station is searched for at the fixed frequencies or in the limited frequency range.

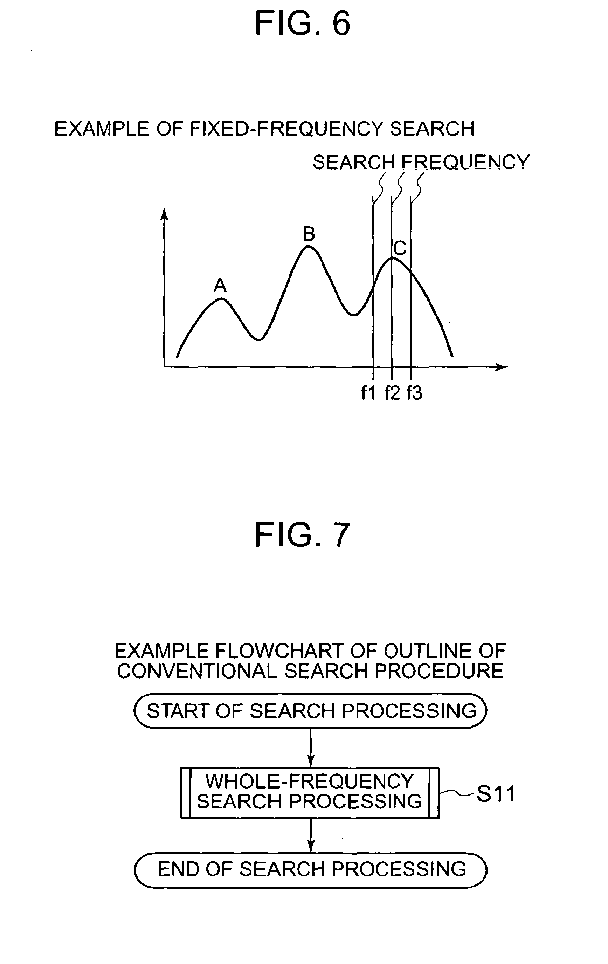

FIG. 5 shows an example in which a limited range (for example, a frequency range from F2 to F3 assigned to a certain provider located in Great Britain) is searched. FIG. 6 shows an example in which a search operation is performed only at fixed frequencies f1, f2, and f3. It is also possible to perform both the radio base station search at the fixed frequencies and the radio base station search at the limited frequencies.

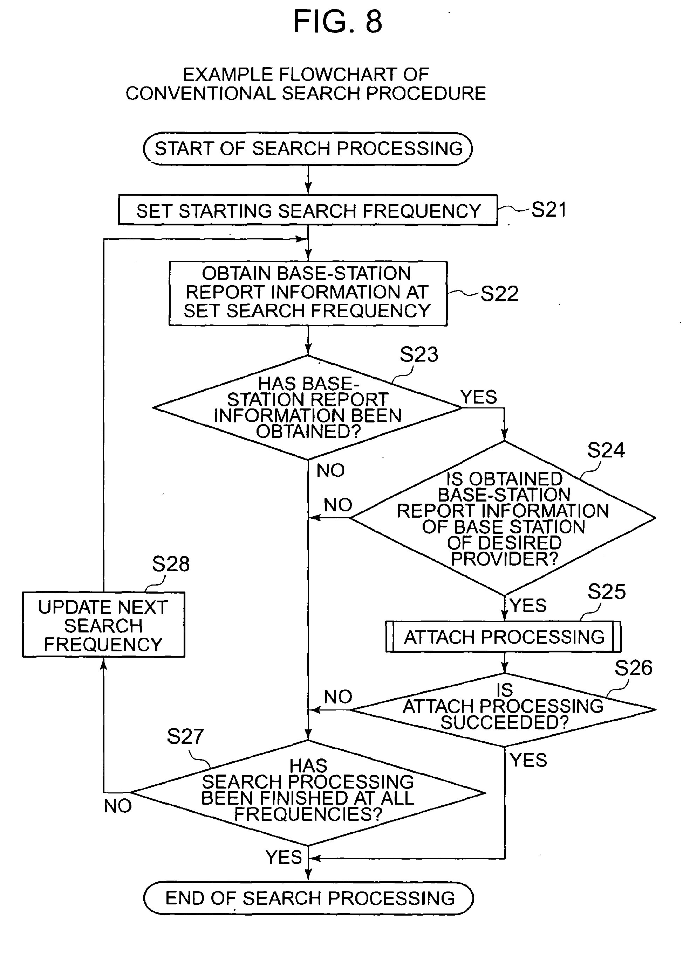

FIGS. 7 and 8 are diagrams for explaining a conventional search operation procedure, shown for comparison with a processing procedure of the present invention. As shown in FIG. 7, in the conventional search operation, after the search operation is started, search processing is performed over the whole frequency range (Step S11).

As shown in FIG. 8, a starting search frequency is set first (Step S21), and base-station report information is obtained at the set search frequency (Step S22). When base-station report information has been obtained, it is next determined whether the base station which has sent the base-station report information is one of base stations of a desired provider (Steps S23 and S24). When base-station report information has not been obtained, the search frequency is changed to continue the search operation (Steps S27 and S28).

When it is determined in Step S24 that the base station is one of base stations of a desired provider, ATTACH processing (position-registration and connection processing) is performed (Step S25). When it is determined in Step S24 that the base station is not one of base stations of a desired provider, the search frequency is changed to continue the search operation (Steps S27 and S28).

When the ATTACH processing has been successfully performed in Step S25, the search operation is ended (Step S26). When the ATTACH processing has not been successfully performed, the search frequency is changed to continue the search operation (Steps S27 and S28).

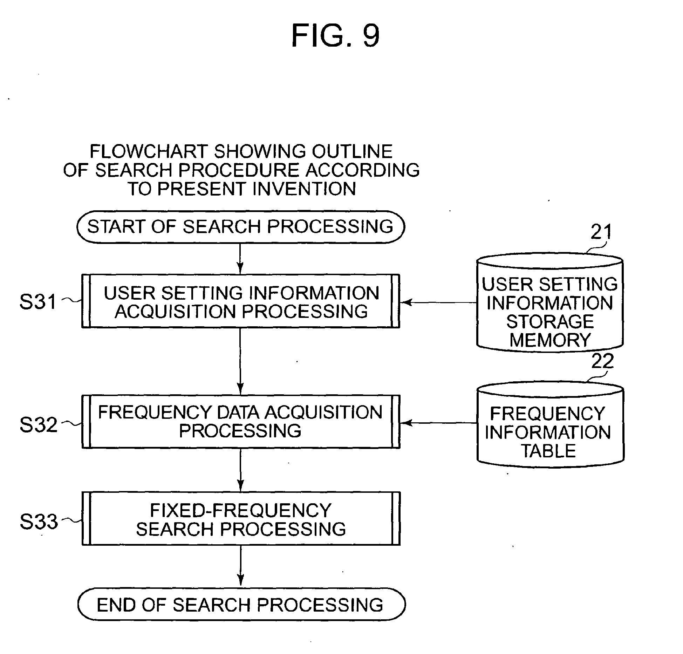

FIG. 9 is a diagram showing a processing procedure of an outline of the search operation performed in the data communication card terminal of the present invention. Hereinafter, the outline of the search operation performed in the data communication card terminal of the present invention will be described with reference to FIG. 9.

At the start of search processing, user setting information acquisition processing is performed first (Step S31). In the user setting information acquisition processing, information recorded in the user setting information storage memory 21, for example, information for each country, is read.

Next, predetermined-frequency-data acquisition processing is performed (Step S32). In the predetermined-frequency-data acquisition processing, frequency data recorded in the frequency information table 22 is read. In this example, information on a fixed frequency associated with the country name is read from the frequency information table 22.

Based on the information on a fixed frequency, read from the frequency information table 22, radio base station search processing is performed (Step S33).

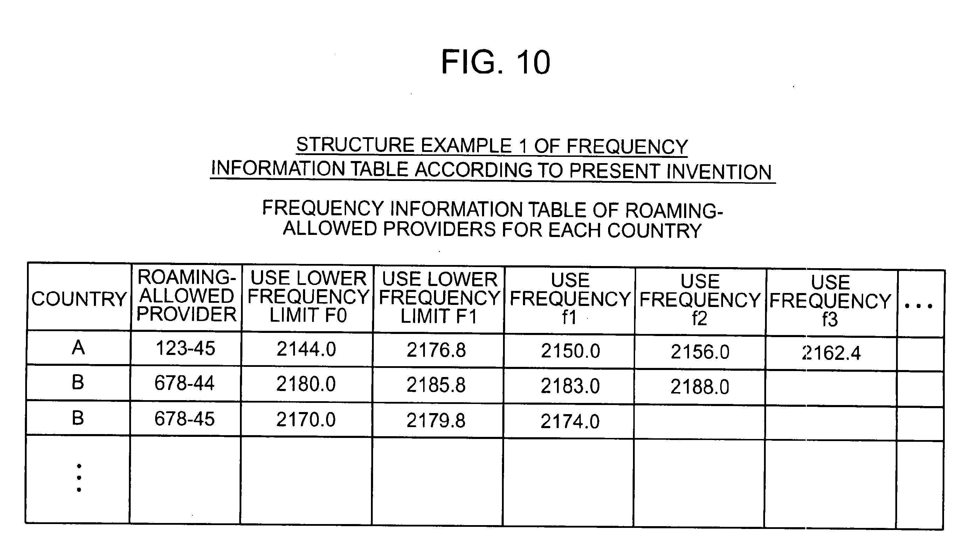

FIG. 10 is a diagram showing a first structure example of the frequency information table. FIG. 10 shows an example of the table in which a roaming-allowed provider, a use lower frequency limit (F0), a use upper frequency limit (F1), and frequencies (f1, f2, and f3) used in fixed-frequency search are registered for each country, with the country name being used as a key.

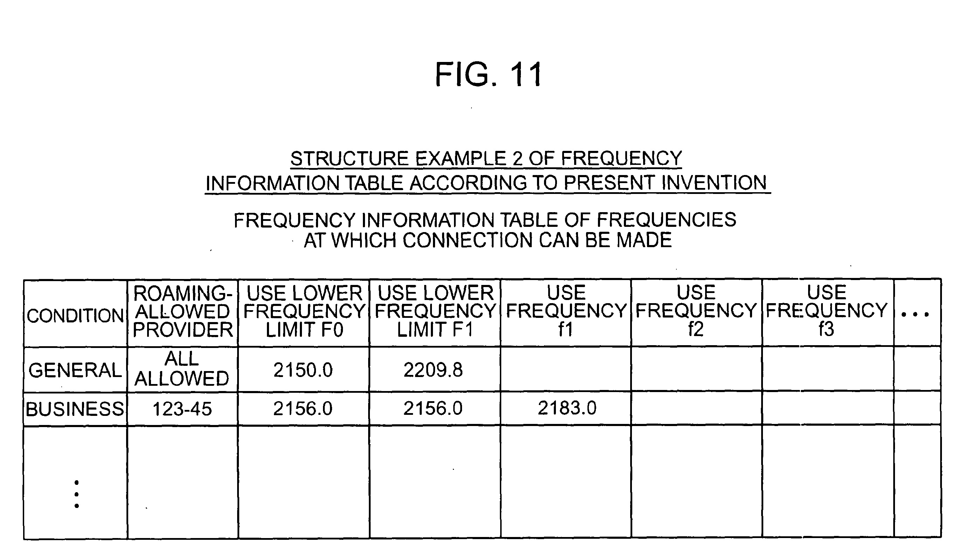

FIG. 11 is a diagram showing a second structure example of the frequency information table. FIG. 11 shows an example of the table in which a roaming-allowed provider, a use lower frequency limit (F0), a use upper frequency limit (F1), and frequencies (f1, f2, and f3) used in fixed-frequency search are registered, with a use condition (general use or business use) being used as a key. In the example shown in FIG. 11, when the general use is selected, limited-frequency search is performed in the range from the lower frequency limit (F0) to the upper frequency limit (F1). When the business use is selected, fixed-frequency search is performed, and, if necessary, the limited-frequency search is performed.

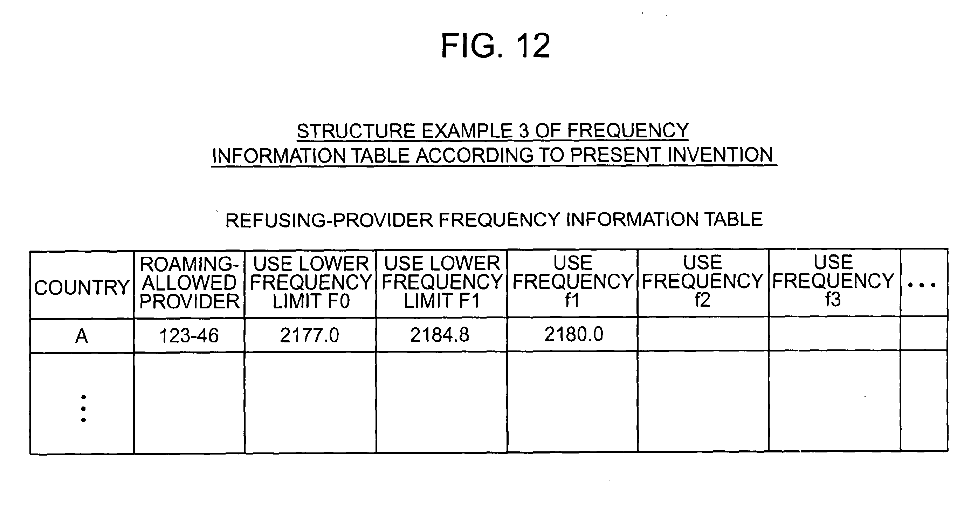

FIG. 12 is a diagram showing a third structure example of the frequency information table, and showing an example of the frequency information table of a radio base station of a provider which refuses a connection. In the table shown in FIG. 12, a use upper frequency limit (F1) and a use frequency (f1) are registered for a roaming-allowed provider (123-46) which refuses a connection in country "A".

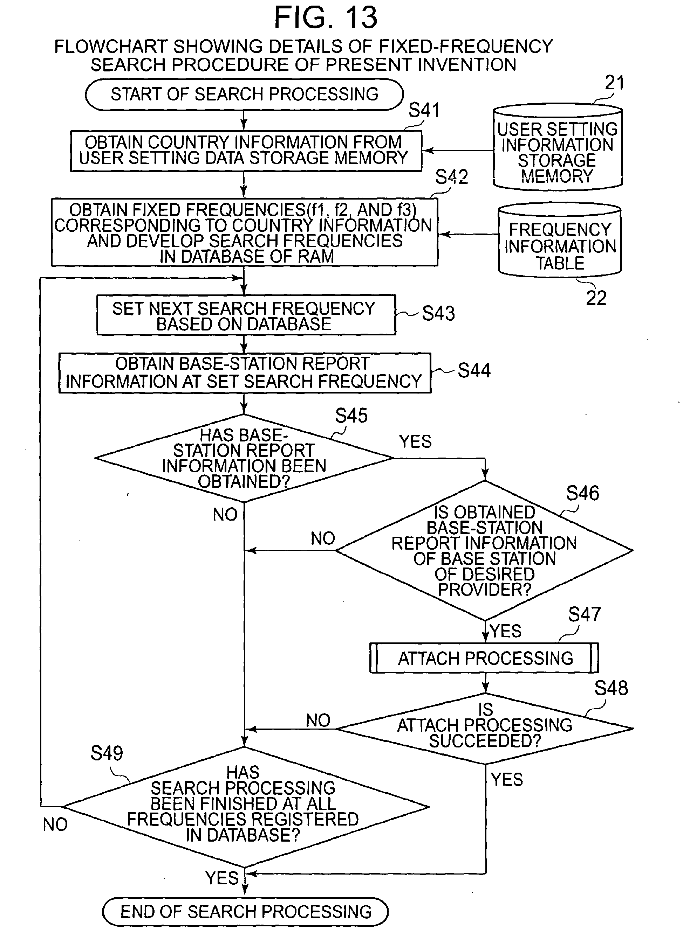

FIG. 13 is a flowchart showing a detailed procedure of fixed-frequency search processing according to the present invention, and showing in detail the procedure of the fixed-frequency search processing performed in the data communication card terminal of the present invention. Hereinafter, the processing procedure will be described with reference to FIG. 13.

After the search processing is started, user setting data is first obtained from the user setting information storage memory 21 (Step S41). For example, country name information is obtained.

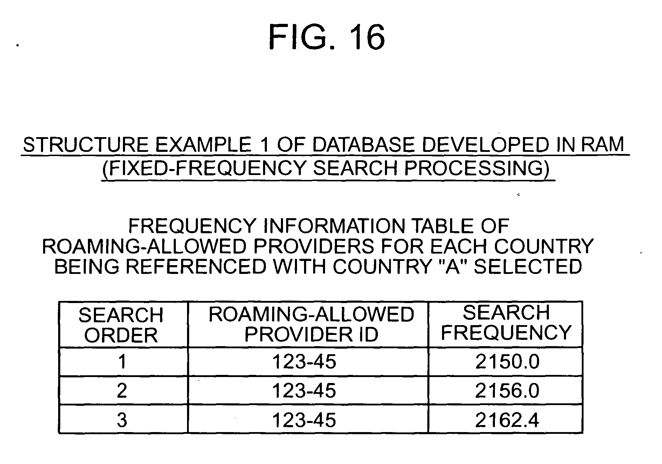

Next, using the country name information, the frequency information table 22 is referenced, fixed frequencies (f1, f2, f3, ...) associated with the country name are obtained therefrom, and the search frequencies are developed in a database of the RAM (Step S42). For example, the database has a structure as shown in FIG. 16.

Based on the database developed in the RAM, a frequency to be searched for is set (Step S43), and base-station report information is obtained at the set search frequency (Step S44). Note that the fixed frequency f1 is first set, and then, the fixed frequencies f2, f3, ... are sequentially set.

Then, it is determined whether base-station report information has been obtained at the set search frequency (Step S45). When it is determined that base-station report information has been obtained at the set search frequency, it is next determined whether the base station which has sent the base-station report information is one of base stations of a desired provider (Step S46). When it is determined that base-station report information has not been obtained at the set search frequency, it is determined whether the search operation has been finished at all the frequencies registered in the database (Step S49) . When it is determined that the search operation has not been finished at all the frequencies, the search frequency is updated and the processing from Step S43 is performed again.

When it is determined in Step S46 that the base station is one of base stations of a desired provider, the ATTACH processing is performed (Step S47) . When it is determined that the base station is not one of base stations of a desired provider, the search frequency is updated and the processing from Step S43 is performed again.

When the ATTACH processing of Step S47 has been successfully performed, the search processing is completed. When the ATTACH processing has not been successfully performed, the search frequency is updated and the processing from Step S43 is performed again.

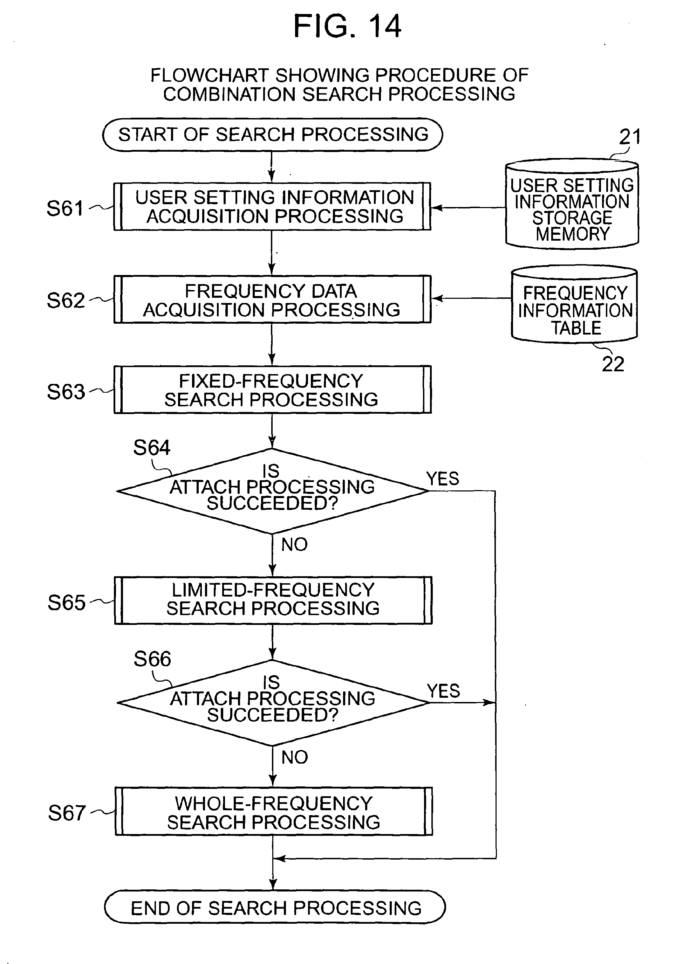

FIG. 14 is a flowchart showing a procedure of combination search processing according to a second embodiment of the present invention. FIG. 14 shows an example of processing performed by using the fixed-frequency search processing, the limited-frequency search processing, and the whole-frequency search processing, in combination. Hereinafter, the processing procedure will be described with reference to FIG. 14.

After the search processing is started, user setting data is first obtained from the user setting information storage memory 21 (Step S61). For example, country name information is obtained.

Next, using the country name information, the frequency information table 22 is referenced, use frequency-range information associated with the country name is obtained therefrom, and the search frequencies are developed in a database of the RAM (Step S62).

Based on the database developed in the RAM, a fixed frequency to be searched for is set and fixed-frequency search processing is performed (Step S63). When base-station report information has been obtained through the fixed-frequency search processing and the ATTACH processing has been successfully performed, the search processing is ended (Step S64).

When the ATTACH processing which follows the fixed-frequency search processing has not been successfully performed, the limited-frequency search processing is performed next (Step S65). When base-station report information has been obtained through the limited-frequency search processing and the ATTACH processing has been successfully performed, the search processing is ended (Step S66).

When the ATTACH processing which follows the limited-frequency search processing of Step S65 has not been successfully performed, the whole-frequency search processing is performed next (Step S67).

In this example, the fixed-frequency search processing, whose processing speed is the highest, is first performed. When the fixed-frequency search processing has not been successfully performed, the limited-frequency search processing, whose processing speed is the second highest, is performed. When the limited-frequency search processing has not been successfully performed, the whole-frequency search processing is performed last. Accordingly, it is possible to achieve both an improvement in a search processing speed and an improvement in probability of success in the ATTACH processing.

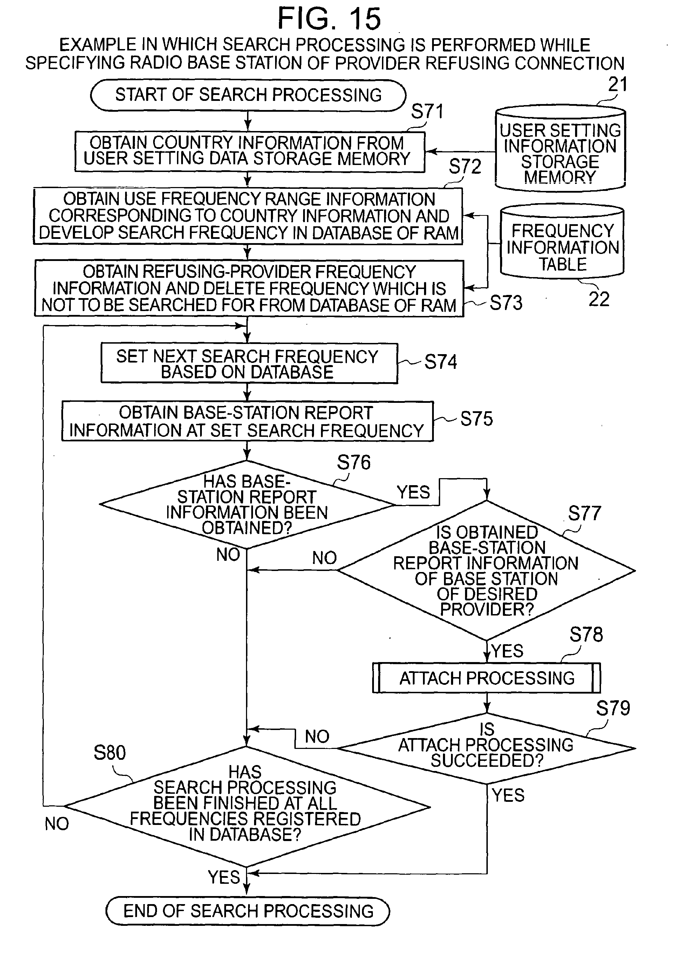

FIG. 15 is a flowchart showing a procedure of search processing performed while specifying a radio base station of a provider which refuses a connection, according to a third embodiment of the present invention. FIG. 15 shows a procedure of the limited-frequency search processing performed while a radio base station of a provider which refuses a connection is excluded from search targets. Hereinafter, the processing procedure will be described with reference to FIG. 15.

After the search processing is started, user setting data is first obtained from the user setting information storage memory 21 (Step S71). For example, country name information is obtained.

Next, using the country name information, the frequency information table 22 is referenced, use frequency-range information is obtained therefrom, and the search frequencies are developed in a database of the RAM (Step S72). When the search frequencies are developed in the database of the RAM, frequency information of a radio base station of a provider which refuses a connection is obtained, and the frequency which is not to be searched for is deleted from the database of the RAM (Step S73). Accordingly, it is possible to avoid searching at the frequency of a radio base station of a provider which refuses a connection.

Based on the database developed in the RAM, a frequency to be searched for is set (Step S74) and base-station report information is obtained at the set search frequency (Step S75).

It is determined whether base-station report information has been obtained at the set search frequency (Step S76). When it is determined that base-station report information has been obtained at the set search frequency, it is next determined whether the base station which has sent the base-station report information is one of base stations of a desired provider (Step S77). When it is determined that base-station report information has not been obtained at the set search frequency, it is determined whether the search operation has been finished at all the frequencies registered in the database (Step S80). When it is determined that the search operation has not been finished at all the frequencies, the search frequency is updated and the processing from Step S74 is performed again.

When it is determined in Step S77 that the base station is one of base stations of a desired provider, the ATTACH processing is performed (Step S78). When it is determined in Step S77 that the base station is not one of base stations of a desired provider, the search frequency is updated and the processing from Step S74 is performed again.

When the ATTACH processing of Step S78 has been successfully performed, the search processing is completed. When the ATTACH processing has not been successfully performed, the search frequency is updated and the processing from Step S74 is performed again.

FIG. 16 is a diagram showing a first example of the database developed in the RAM, in a case of the fixed-frequency search processing. FIG. 16 shows an example of the frequency information table of roaming-allowed providers for each country with country "A" being selected. Pieces of data of the search order, a roaming-allowed provider ID, and a search frequency are developed in the database of the RAM.

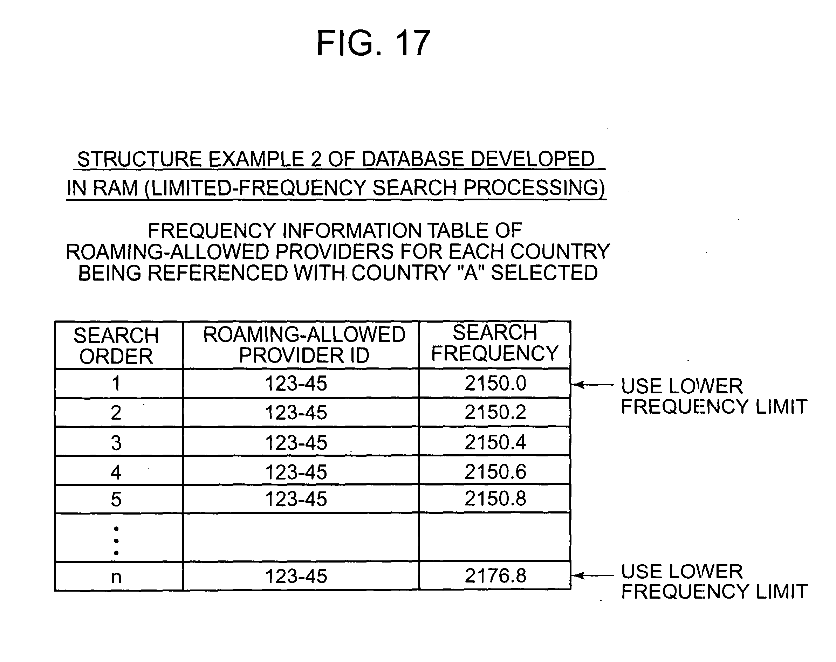

FIG. 17 is a diagram showing a second example of the database developed in the RAM, in a case of the limited-frequency search processing. FIG. 17 shows an example of the frequency information table of roaming-allowed providers for each country with country "A" being selected. Pieces of data of the search order, a roaming-allowed provider ID, the lower search frequency limit (2150.0 MHz), search frequencies obtained at intervals of a sampling frequency, and the use upper frequency limit (2176.8 MHz) are developed in the database of the RAM.

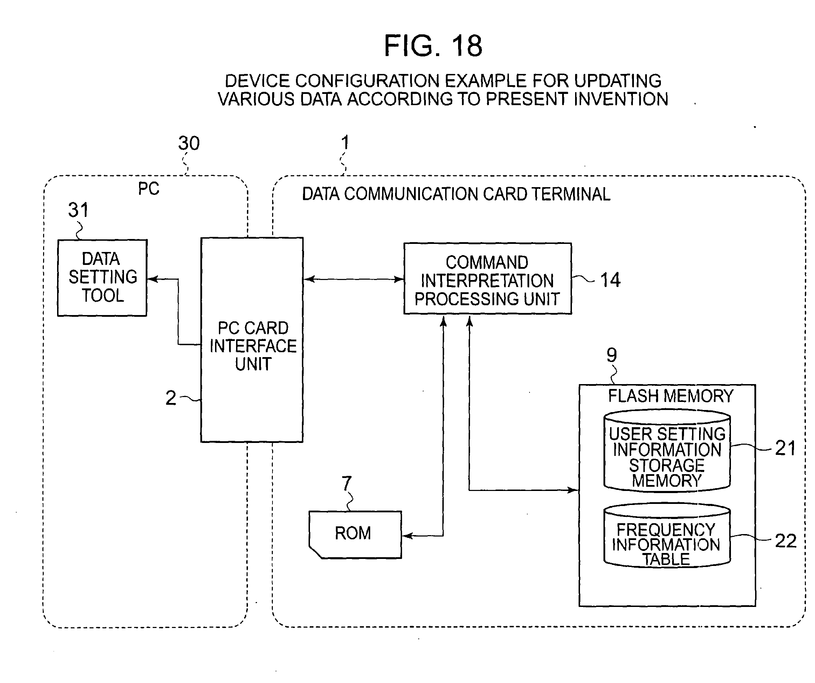

FIG. 18 is a diagram showing an example of a device configuration for updating various data, according to the present invention. As shown in FIG. 18, the PC 30 and the data communication card terminal 1 are connected to each other via the PC card interface unit 2. The PC 30 includes a data setting tool 31. With the use of the data setting tool 31, data setting (or updating or deleting) is performed with respect to the user setting information storage memory 21 and the frequency information table 22 included in the flash memory 9. The data communication card terminal 1 includes the command interpretation processing unit 14. The command interpretation processing unit 14 interprets a command sent from the data setting tool 31 of the PC 30 and performs data setting with respect to the user setting information storage memory 21 and the frequency information table 22.

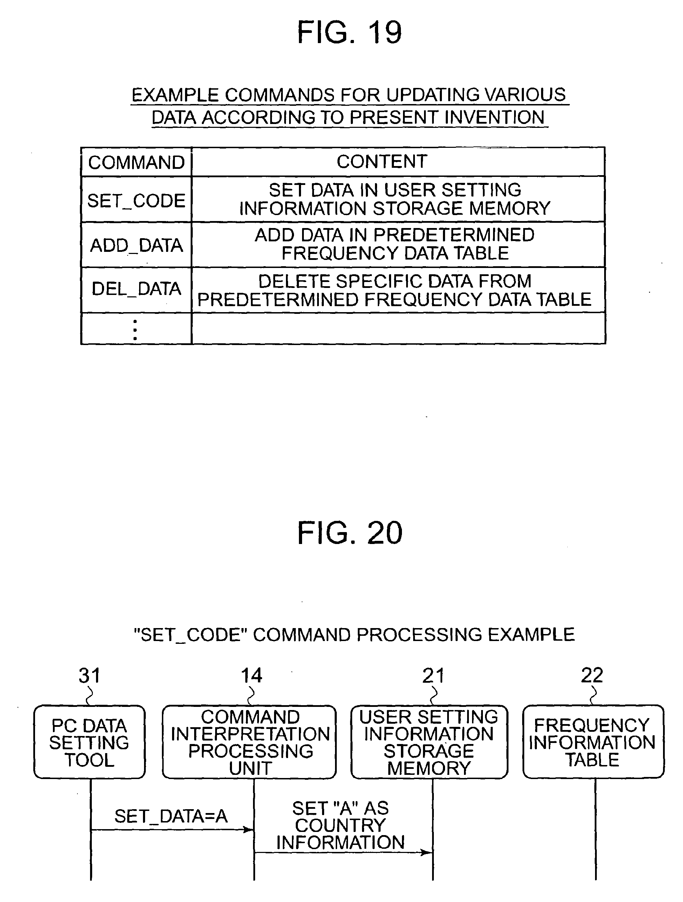

FIG. 19 is a diagram showing example commands for updating various data. FIG. 19 shows example commands for updating various data used by the data communication card terminal of the present invention.

A command of "SET_CODE" is used to set data in the user setting information storage memory 21. A command of "ADD_DATA" is used to add data in the frequency information table 22. A command of "DEL_DATA" is used to delete specific data from the frequency information table 22.

FIG. 20 is a diagram showing a processing sequence of a "SET CODE" command. When a command of "SET_CODE=A" is sent from the data setting tool 31 of the PC to the command interpretation processing unit 14 of the data communication card terminal 1, "A" is set, as country name information, in the user setting information storage memory 21.

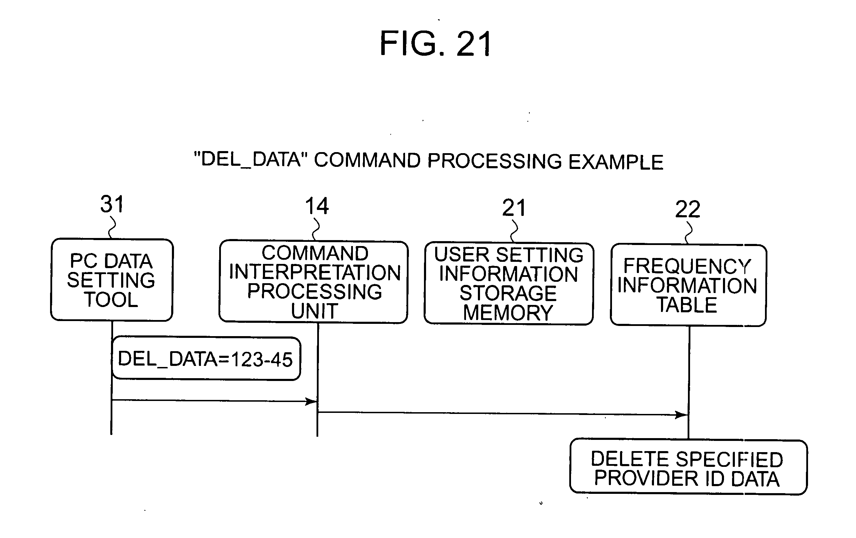

FIG. 21 is a diagram showing a processing sequence of an "ADD DATA" command. When a command of "ADD_DATA=A,123-45,2050.0,2060.0,2055,0," is sent from the data setting tool 31 of the PC to the command interpretation processing unit 14 of the data communication card terminal 1, data is added in the frequency information table 22. Specifically, pieces of information on the roaming provider ID (123-45), the country name information (A), the lower frequency limit (2050.0 MHz), the upper frequency limit (2060.0 MHz), and the fixed frequency (2055.0) are added.

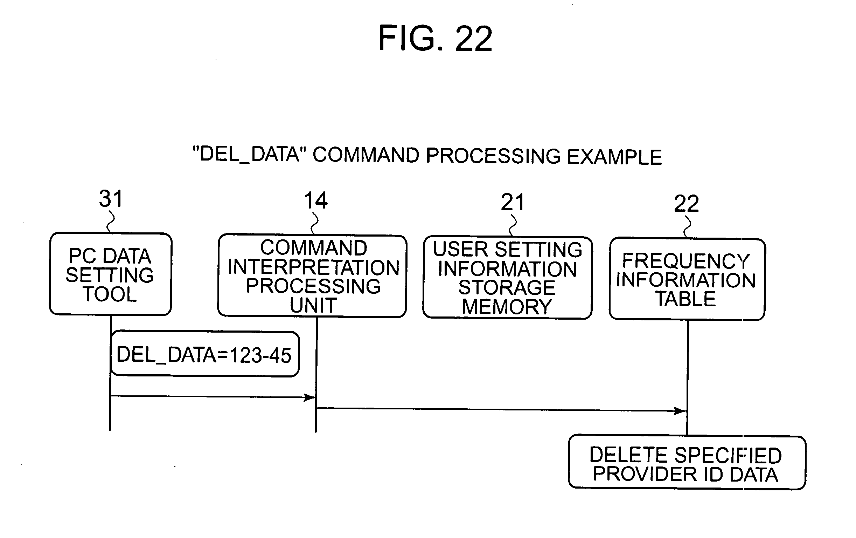

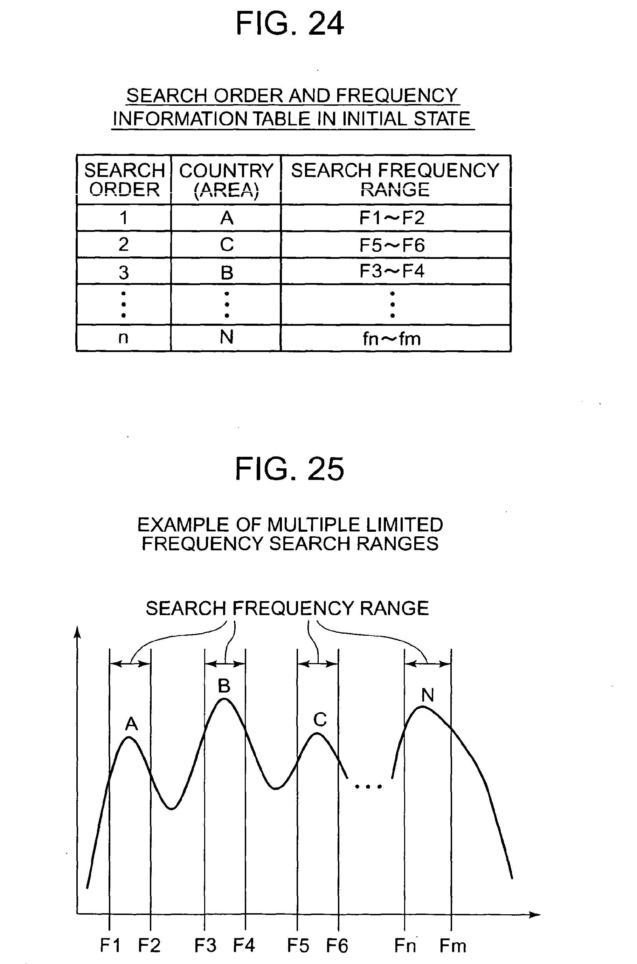

FIG. 22 is a diagram showing a processing sequence of a "DEL_DATA" command. When a command of "DEL_DATA=123-45" is sent from the data setting tool 31 of the PC to the command interpretation processing unit 14 of the data communication card terminal 1, information of the specified provider (123-45) is deleted form the frequency information table 22.
Next, a fourth embodiment of the present invention will be described.

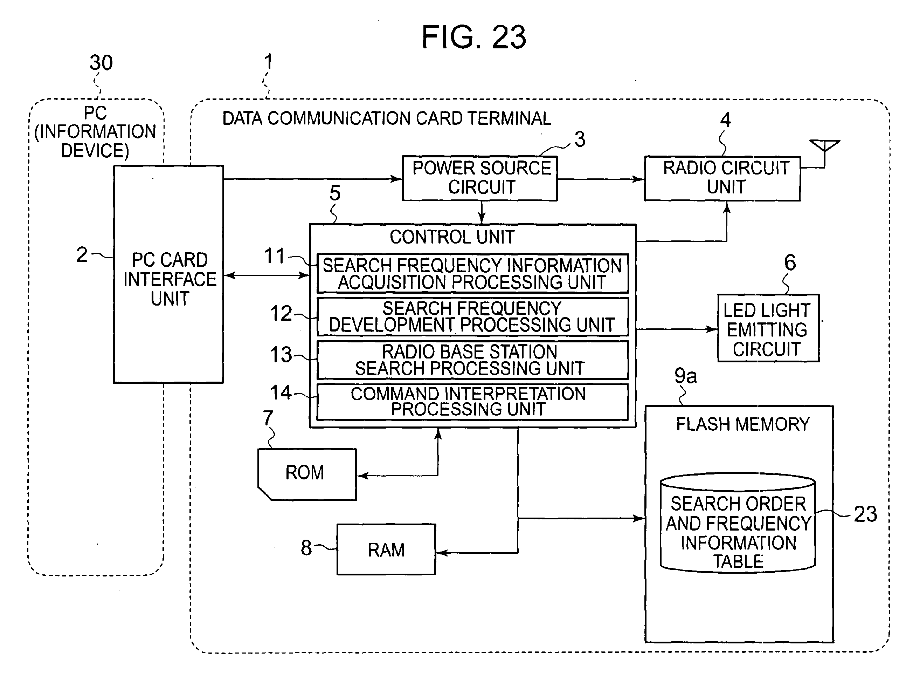

FIG. 23 is a diagram showing a second hardware configuration of the data communication terminal according to the present invention. A description of parts identical with those shown in FIG. 1 is omitted.
A search order and frequency information memory 23 included in a flash memory 9a shown in FIG. 23 stores, as shown in FIG. 24, the frequency search order and the search frequency range associated with a country or an area at each rank in the search order. In the search order, specified earlier is a country or an area which has a larger number of base stations to be searched for, for example, a country, an area, and a desired provider in North America, Europe, and East Asia.
FIG. 25 shows a state in which radio base station search is performed at multiple limited frequencies according to data stored in FIG. 24.

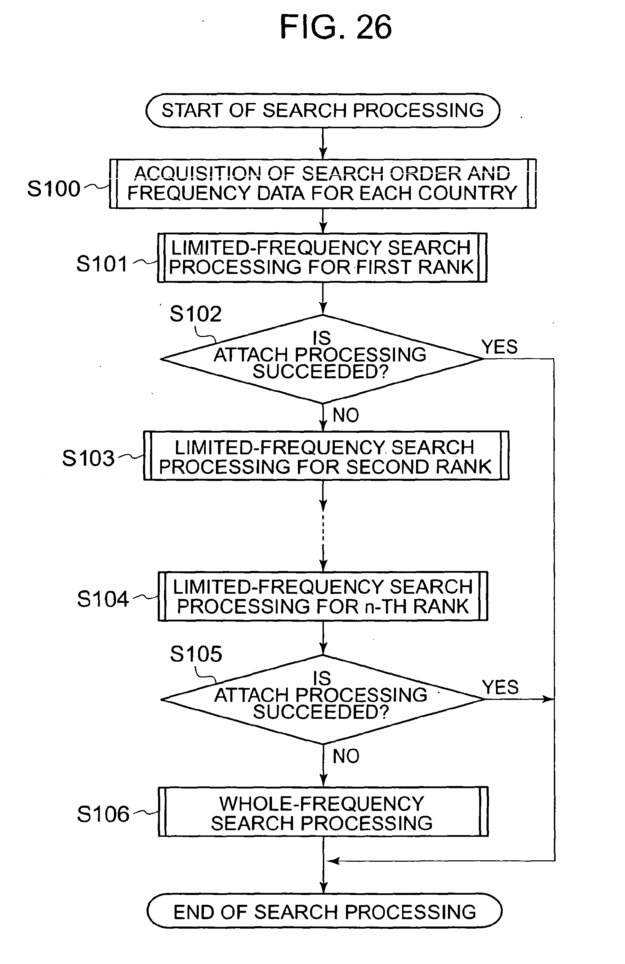

FIG. 26 shows an outline processing procedure of a search operation according to the fourth embodiment, shown in FIG. 23, of the present invention.

First, the search processing is started and acquisition processing of search order and frequency data for each country is performed(Step S100). In the acquisition processing of search order and frequency data for each country, the search order and the search frequency range associated with a country placed at each rank in the search order, which are stored in the search order and frequency information memory 23, are read.

Based on the read search order and frequency data for each country, limited-frequency search processing is first performed in a frequency range associated with the country placed at the first rank in the search order (Step S101). Referring to FIG. 24, the limited-frequency search processing is performed in the frequency range from F1 to F2 associated with country "A" placed at the first rank in the search order. When base-station report information has been obtained through the limited-frequency search processing and the ATTACH processing has been successfully performed, the search processing is ended (Step S102).

When the ATTACH processing, which follows the search processing performed for the first rank in the search order, has not been successfully performed in Step S102, limited-frequency search processing is performed next in the frequency range from F5 to F6 associated with country "C" placed at the second rank in the search order (Step S103). At this time, although not shown in FIG. 26, when the ATTACH processing has been successfully performed, the search processing is ended, and when the ATTACH processing has not been successfully performed, search processing is performed for country "B" placed at the third rank in the search order, as in Step S102. In this manner, the limited-frequency search processing is sequentially performed according to the search order until the ATTACH processing is successfully performed. Lastly, the search processing is performed in the limited-frequency range from Fn to Fm at the n-th rank in the search order, which is the last rank among the ranks read from the search order and frequency information memory 23 (Step S104).

When the ATTACH processing, which follows the limited-frequency search processing performed for the n-th rank in Step S104, has been successfully performed, the search processing is ended (Step S105).
On the other hand, when the ATTACH processing, which follows the limited-frequency search processing performed for the n-th rank in Step S104, has not been successfully performed, whole-frequency search is next performed (Step S106) and the search processing is ended.

According to this example, a data communication card terminal which can be used in a large number of countries or areas and which has a high search-processing speed can be realized.
Although the contents stored in the search order and frequency information memory 23 of the fourth embodiment of the present invention are fixed, the contents may be rewritten based on a search result.

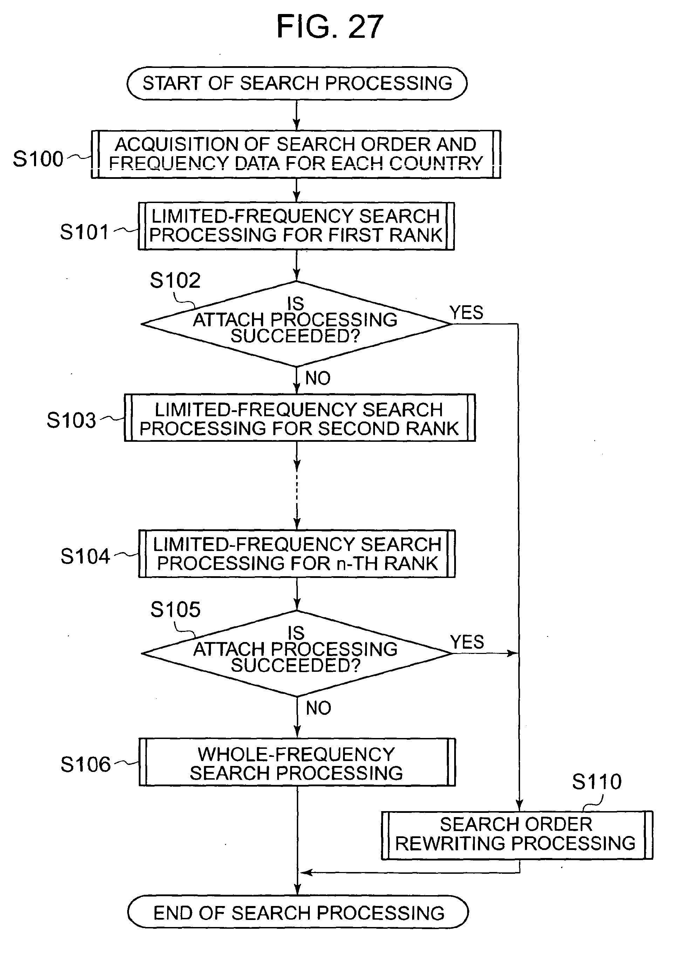

FIG. 27 shows an outline processing procedure of a search operation in which the contents stored in the search order and frequency information memory 23 of FIG. 23 are rewritten based on a search result, according to a fifth embodiment of the present invention. A description of steps identical with those of FIG. 26 is omitted.

After the ATTACH processing has been successfully performed (Step S102, S105), which follows the limited-frequency search processing performed for each rank in the search order (Step S101, S103, S104), the contents stored in the search order and frequency information memory 23 are rewritten such that frequency data for each country corresponding to a rank in the search order at which the ATTACH processing has been successfully performed is placed at the first rank in the search order (Step S110).

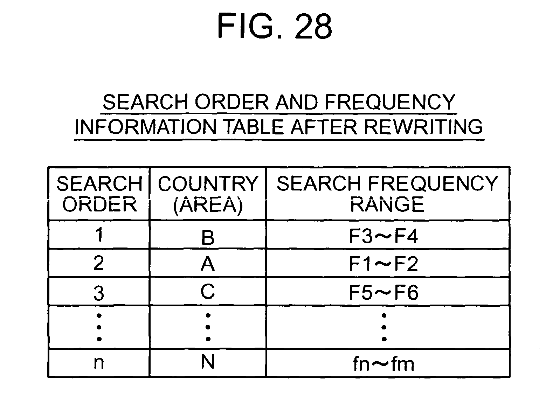

For example, among ranks in the search order shown in FIG. 24, when the ATTACH processing has not been successfully performed after the limited-frequency search processing performed for the first rank and the second rank in the search order, and when the ATTACH processing has been successfully performed after search processing performed in the search frequency range from F5 to F6 associated with country "B" placed at the third rank in the search order, the contents stored in the search order and frequency information memory 23 are rewritten such that country "B" is placed at the first rank in the search order and the countries of the subsequent ranks in the search order are shifted downward respectively, as shown in FIG. 28.

Accordingly, when the search processing is started at the next time, the limited-frequency search processing is first performed in the search frequency range from F5 to F6 associated with country "B", for which the ATTACH processing has been successfully performed in the last search processing, because country "B" is placed at the first rank.

According to this example, since an area where the user currently stays, for example, is automatically searched by priority in the second and subsequent search processing to be performed, the search speed is not significantly reduced even when the user moves in areas. This is useful for a user who travels countries and uses an international roaming service.

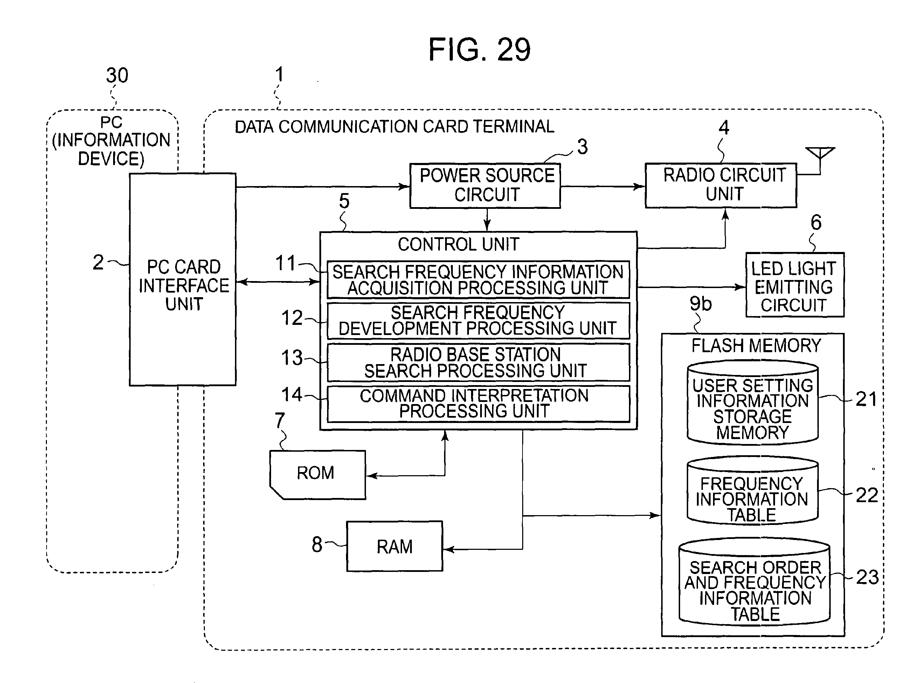

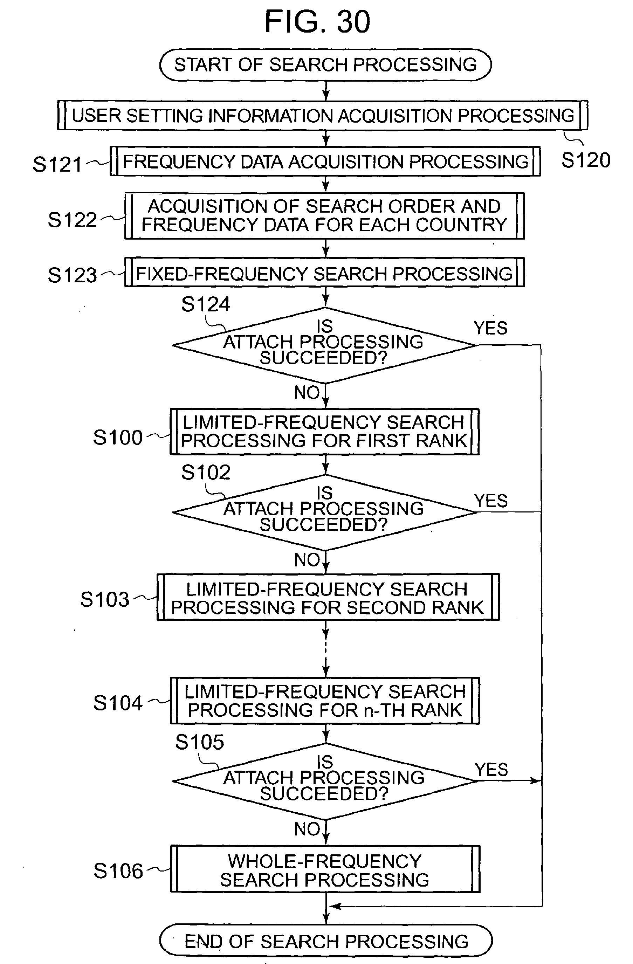

FIGS. 29 and 30 are diagrams for explaining a sixth embodiment in which a fixed-frequency search procedure is used in combination with the procedure of the fourth embodiment shown in FIG. 26.

FIG. 29 is a diagram showing a third hardware configuration of a data communication terminal according to the present invention. A description of parts identical with those shown in FIGS. 1 and 23 is omitted. In FIG. 29, a flash memory 9b includes the user setting information storage memory 21, the frequency information table 22, and the search order and frequency information memory 23.

FIG. 30 shows an outline of a search procedure according to the sixth embodiment of the present invention.

After the search processing is started, user setting data is first obtained from the user setting information storage memory 21 (Step S120).

Next, using country name information, the frequency information table 22 is referenced, and use frequency range information associated with the country name is obtained therefrom (Step S121).

Then, search order and frequency data for each country are obtained from the search order and frequency information memory 23 (Step S122).

Next, a fixed frequency to be searched for is set, and fixed-frequency search processing is first performed (Step S123) . When base-station report information has been obtained through the fixed-frequency search processing and the ATTACH processing has been successfully performed, the search processing is ended (Step S124).

When the ATTACH processing has not been successfully performed, which follows the fixed-frequency search processing, limited-frequency search processing for the first rank is performed next (Step S100). Thereafter, the search processing is performed as in the embodiment shown in FIG. 26.
According to this example, searching can be performed at a higher speed.

In the example described above, the user setting information storage memory 21, the frequency information table 22, and the search order and frequency information memory 23 are stored in the flash memory 9b. The user setting information storage memory 21, the frequency information table 22, and the search order and frequency information memory 23 may be stored in the ROM of the terminal. Alternatively, the user setting information storage memory 21, the frequency information table 22, and the search order and frequency information memory 23 may be stored in an external memory such as a memory card which can be connected to the data communication card terminal 1.

The ROM 7 may be omitted when the flash memory 9 stores the contents of the ROM 7 and the flash memory 9 has the function of the ROM 7.

In the example described above, search data is updated by a command sent from the PC. Data may be updated by a command sent from the PC after downloading base station information (search range) via the Internet.

The embodiments of the present invention have been described. It is needless to say that the present invention is not limitedly applied to the data communication card terminal, but the present invention can be applied to a cellular phone, a PDA, or the like.

In the embodiments of the present invention, the W-CDMA system has been described as an example. It is needless to say that the present invention is useful for communications in other systems capable of performing international roaming, or in other communication systems in which a large number of base stations are searched for, without using international roaming, such as CDMA 2000 systems and TD-SCDMA systems.

The embodiments of the present invention have been described. It is a matter of course that the data communication card terminal of the present invention is not limited to the examples described above with reference to the drawings, but various modifications can be made without departing from the scope of the present invention.

### Industrial Applicability

When a data communication terminal is connected to an information device such as a PC and a PDA and used as a modem, the present invention has an effect in which radio base station search and selection processing are quickly completed. Therefore, the present invention is useful for a data communication terminal, a radio base station searching method, and a program.
FIG. 1
   - 1: DATA COMMUNICATION CARD TERMINAL
   - 2: PC CARD INTERFACE UNIT
   - 3: POWER SOURCE CIRCUIT
   - 4: RADIO CIRCUIT UNIT
   - 5: CONTROL UNIT
   - 6: LED LIGHT EMITTING CIRCUIT
   - 9: FLASH MEMORY
   - 11: SEARCH FREQUENCY INFORMATION ACQUISITION PROCESSING UNIT
   - 12: SEARCH FREQUENCY DEVELOPMENT PROCESSING UNIT
   - 13: RADIO BASE STATION SEARCH PROCESSING UNIT
   - 14: COMMAND INTERPRETATION PROCESSING UNIT
   - 21: USER SETTING INFORMATION STORAGE MEMORY
   - 22: FREQUENCY INFORMATION TABLE
   - 30: PC (INFORMATION DEVICE)
FIG. 2
   - A -: C RADIO BASE STATION USE EXAMPLE OF DATA COMMUNICATION CARD
FIG. 3
   - (1): RELATIONSHIP BETWEEN FREQUENCY AND RADIO WAVE INTENSITY IN EXAMPLE OF FIG. 2
   - (2): FREQUENCY
FIG. 4
   - (1): EXAMPLE OF CONVENTIONAL SEARCH RANGE
   - (2): SEARCH FREQUENCY RANGE
FIG. 5
   - (1): EXAMPLE OF LIMITED FREQUENCY SEARCH RANGE
   - (2): SEARCH FREQUENCY RANGE
FIG. 6
   - (1): EXAMPLE OF FIXED-FREQUENCY SEARCH
   - (2): SEARCH FREQUENCY
FIG. 7
   - S11: WHOLE-FREQUENCY SEARCH PROCESSING
   - (1): EXAMPLE FLOWCHART OF OUTLINE OF CONVENTIONAL SEARCH PROCEDURE
   - (2): START OF SEARCH PROCESSING
   - (3): END OF SEARCH PROCESSING
FIG. 8
   - S21: SET STARTING SEARCH FREQUENCY
   - S22: OBTAIN BASE-STATION REPORT INFORMATION AT SET SEARCH FREQUENCY
   - S23: HAS BASE-STATION REPORT INFORMATION BEEN OBTAINED?
   - S24: IS OBTAINED BASE-STATION REPORT INFORMATION OF BASE STATION OF DESIRED PROVIDER?
   - S25: ATTACH PROCESSING
   - S26: IS ATTACH PROCESSING SUCCEEDED?
   - S27: HAS SEARCH PROCESSING BEEN FINISHED AT ALL FREQUENCIES?
   - S28: UPDATE NEXT SEARCH FREQUENCY
   - (1): EXAMPLE FLOWCHART OF CONVENTIONAL SEARCH PROCEDURE
   - (2): START OF SEARCH PROCESSING
   - (3): END OF SEARCH PROCESSING
FIG. 9
   - 21: USER SETTING INFORMATION STORAGE MEMORY
   - 22: FREQUENCY INFORMATION TABLE
   - S31: USER SETTING INFORMATION ACQUISITION PROCESSING
   - S32: FREQUENCY DATA ACQUISITION PROCESSING
   - S33: FIXED-FREQUENCY SEARCH PROCESSING
   - (1): FLOWCHART SHOWING OUTLINE OF SEARCH PROCEDURE ACCORDING TO PRESENT INVENTION
   - (2): START OF SEARCH PROCESSING
   - (3): END OF SEARCH PROCESSING
FIG. 10
   - (1): STRUCTURE EXAMPLE 1 OF FREQUENCY INFORMATION TABLE ACCORDING TO PRESENT INVENTION
   - (2): FREQUENCY INFORMATION TABLE OF ROAMING-ALLOWED PROVIDERS FOR EACH COUNTRY
   - (3): COUNTRY
   - (4): ROAMING-ALLOWED PROVIDER
   - (5): USE LOWER FREQUENCY LIMIT F0
   - (6): USE LOWER FREQUENCY LIMIT F1
   - (7): USE FREQUENCY
FIG. 11
   - (1): STRUCTURE EXAMPLE 2 OF FREQUENCY INFORMATION TABLE ACCORDING TO PRESENT INVENTION
   - (2): FREQUENCY INFORMATION TABLE OF FREQUENCIES AT WHICH CONNECTION CAN BE MADE
   - (3): CONDITION
   - (4): ROAMING-ALLOWED PROVIDER
   - (5): USE LOWER FREQUENCY LIMIT F0
   - (6): USE LOWER FREQUENCY LIMIT F1
   - (7): USE FREQUENCY
   - (8): GENERAL
   - (9): ALL ALLOWED
   - (10): BUSINESS
FIG. 12
   - (1): STRUCTURE EXAMPLE 3 OF FREQUENCY INFORMATION TABLE ACCORDING TO PRESENT INVENTION
   - (2): REFUSING-PROVIDER FREQUENCY INFORMATION TABLE
   - (3): COUNTRY
   - (4): ROAMING-ALLOWED PROVIDER
   - (5): USE LOWER FREQUENCY LIMIT F0
   - (6): USE LOWER FREQUENCY LIMIT F1
   - (7): USE FREQUENCY
FIG. 13
   - 21: USER SETTING INFORMATION STORAGE MEMORY
   - 22: FREQUENCY INFORMATION TABLE
   - S41: OBTAIN COUNTRY INFORMATION FROM USER SETTING DATA STORAGE MEMORY
   - S42: OBTAIN FIXED FREQUENCIES (f1, f2, AND f3) CORRESPONDING TO COUNTRY INFORMATION AND DEVELOP SEARCH FREQUENCIES IN DATABASE OF RAM
   - S43: SET NEXT SEARCH FREQUENCY BASED ON DATABASE
   - S44: OBTAIN BASE-STATION REPORT INFORMATION AT SET SEARCH FREQUENCY
   - S45: HAS BASE-STATION REPORT INFORMATION BEEN OBTAINED?
   - S46: IS OBTAINED BASE-STATION REPORT INFORMATION OF BASE STATION OF,DESIRED PROVIDER?
   - S47: ATTACH PROCESSING
   - S48: IS ATTACH PROCESSING SUCCEEDED?
   - S49: HAS SEARCH PROCESSING BEEN FINISHED AT ALL FREQUENCIES REGISTERED IN DATABASE?
   - (1): FLOWCHART SHOWING DETAILS OF FIXED-FREQUENCY SEARCH PROCEDURE OF PRESENT INVENTION
   - (2): START OF SEARCH PROCESSING
   - (3): END OF SEARCH PROCESSING
FIG. 14
   - 21: USER SETTING INFORMATION STORAGE MEMORY
   - 22: FREQUENCY INFORMATION TABLE
   - S61: USER SETTING INFORMATION ACQUISITION PROCESSING
   - S62: FREQUENCY DATA ACQUISITION PROCESSING
   - S63: FIXED-FREQUENCY SEARCH PROCESSING
   - S64,S66: IS ATTACH PROCESSING SUCCEEDED?
   - S65: LIMITED-FREQUENCY SEARCH PROCESSING
   - S67: WHOLE-FREQUENCY SEARCH PROCESSING
   - (1): FLOWCHART SHOWING PROCEDURE OF COMBINATION SEARCH PROCESSING
   - (2): START OF SEARCH PROCESSING
   - (3): END OF SEARCH PROCESSING
FIG. 15
   - 21: USER SETTING INFORMATION STORAGE MEMORY
   - 22: FREQUENCY INFORMATION TABLE
   - S71: OBTAIN COUNTRY INFORMATION FROM USER SETTING DATA STORAGE MEMORY
   - S72: OBTAIN USE FREQUENCY RANGE INFORMATION CORRESPONDING TO COUNTRY INFORMATION AND DEVELOP SEARCH FREQUENCY IN DATABASE OF RAM
   - S73: OBTAIN REFUSING-PROVIDER FREQUENCY INFORMATION AND DELETE FREQUENCY WHICH IS NOT TO BE SEARCHED FOR FROM DATABASE OF RAM
   - S74: SET NEXT SEARCH FREQUENCY BASED ON DATABASE
   - S75: OBTAIN BASE-STATION REPORT INFORMATION AT SET SEARCH FREQUENCY
   - S76: HAS BASE-STATION REPORT INFORMATION BEEN OBTAINED?
   - S77: IS OBTAINED BASE-STATION REPORT INFORMATION OF BASE STATION OF DESIRED PROVIDER?
   - S78: ATTACH PROCESSING
   - S79: IS ATTACH PROCESSING SUCCEEDED?
   - S80: HAS SEARCH PROCESSING BEEN FINISHED AT ALL FREQUENCIES REGISTERED IN DATABASE?
   - (1): EXAMPLE IN WHICH SEARCH PROCESSING IS PERFORMED WHILE SPECIFYING RADIO BASE STATION OF PROVIDER REFUSING CONNECTION
   - (2): START OF SEARCH PROCESSING
   - (3): END OF SEARCH PROCESSING
FIG. 16
   - (1): STRUCTURE EXAMPLE 1 OF DATABASE DEVELOPED IN RAM (FIXED-FREQUENCY SEARCH PROCESSING)
   - (2): FREQUENCY INFORMATION TABLE OF ROAMING-ALLOWED PROVIDERS FOR EACH COUNTRY BEING REFERENCED WITH COUNTRY "A" SELECTED
   - (3): SEARCH ORDER
   - (4): ROAMING-ALLOWED PROVIDER ID
   - (5): SEARCH FREQUENCY
FIG. 17
   - (1): STRUCTURE EXAMPLE 2 OF DATABASE DEVELOPED IN RAM (LIMITED-FREQUENCY SEARCH PROCESSING)
   - (2): FREQUENCY INFORMATION TABLE OF ROAMING-ALLOWED PROVIDERS FOR EACH COUNTRY BEING REFERENCED WITH COUNTRY "A" SELECTED
   - (3): SEARCH ORDER
   - (4): ROAMING-ALLOWED PROVIDER ID
   - (5): SEARCH FREQUENCY
   - (6): USE LOWER FREQUENCY LIMIT
   - (7): USE LOWER FREQUENCY LIMIT
FIG. 18
   - 1: DATA COMMUNICATION CARD TERMINAL
   - 2: PC CARD INTERFACE UNIT
   - 9: FLASH MEMORY
   - 14: COMMAND INTERPRETATION PROCESSING UNIT
   - 21: USER SETTING INFORMATION STORAGE MEMORY
   - 22: FREQUENCY INFORMATION TABLE
   - 31: DATA SETTING TOOL
   - (1): DEVICE CONFIGURATION EXAMPLE FOR UPDATING VARIOUS DATA ACCORDING TO PRESENT INVENTION
FIG. 19
   - (1): EXAMPLE COMMANDS FOR UPDATING VARIOUS DATAACCORDING TO PRESENT INVENTION
   - (2): COMMAND
   - (3): CONTENT
   - (4): SET DATA IN USER SETTING INFORMATION STORAGE MEMORY
   - (5): ADD DATA IN PREDETERMINED FREQUENCY DATA TABLE
   - (6): DELETE SPECIFIC DATA FROM PREDETERMINED FREQUENCY DATA TABLE
FIG. 20
   - 14: COMMAND INTERPRETATION PROCESSING UNIT
   - 21: USER SETTING INFORMATION STORAGE MEMORY
   - 22: FREQUENCY INFORMATION TABLE
   - 31: PC DATA SETTING TOOL
   - (1): "SET_CODE" COMMAND PROCESSING EXAMPLE
   - (2): SET "A" AS COUNTRY INFORMATION
FIG. 21
   - 14: COMMAND INTERPRETATION PROCESSING UNIT
   - 21: USER SETTING INFORMATION STORAGE MEMORY
   - 22: FREQUENCY INFORMATION TABLE
   - 31: PC DATA SETTING TOOL
   - (1): "DEL_DATA" COMMAND PROCESSING EXAMPLE
   - (2): DELETE SPECIFIED PROVIDER ID DATA
FIG. 22
   - 14: COMMAND INTERPRETATION PROCESSING UNIT
   - 21: USER SETTING INFORMATION STORAGE MEMORY
   - 22: FREQUENCY INFORMATION TABLE
   - 31: PC DATA SETTING TOOL
   - (1): "DEL_DATA" COMMAND PROCESSING EXAMPLE
   - (2): DELETE SPECIFIED PROVIDER ID DATA
FIG. 23
   - 1: DATA COMMUNICATION CARD TERMINAL
   - 2: PC CARD INTERFACE UNIT
   - 3: POWER SOURCE CIRCUIT
   - 4: RADIO CIRCUIT UNIT
   - 5: CONTROL UNIT
   - 6: LED LIGHT EMITTING CIRCUIT
   - 9a: FLASH MEMORY
   - 11: SEARCH FREQUENCY INFORMATION ACQUISITION PROCESSING UNIT
   - 12: SEARCH FREQUENCY DEVELOPMENT PROCESSING UNIT
   - 13: RADIO BASE STATION SEARCH PROCESSING UNIT
   - 14: COMMAND INTERPRETATION PROCESSING UNIT
   - 23: SEARCH ORDER AND FREQUENCY INFORMATION TABLE
   - 30: PC (INFORMATION DEVICE)
FIG. 24
   - (1): SEARCH ORDER AND FREQUENCY INFORMATION TABLE IN INITIAL STATE
   - (2): SEARCH ORDER
   - (3): COUNTRY (AREA)
   - (4): SEARCH FREQUENCY RANGE
FIG. 25
   - (1): EXAMPLE OF MULTIPLE LIMITED FREQUENCY SEARCH RANGES
   - (2): SEARCH FREQUENCY RANGE
FIG. 26
   - S100: ACQUISITION OF SEARCH ORDER AND FREQUENCY DATA FOR EACH COUNTRY
   - S101: LIMITED-FREQUENCY SEARCH PROCESSING FOR FIRST RANK
   - S102, S105: IS ATTACH PROCESSING SUCCEEDED?
   - S103: LIMITED-FREQUENCY SEARCH PROCESSING FOR SECOND RANK
   - S104: LIMITED-FREQUENCY SEARCH PROCESSING FOR n-TH RANK
   - S106: WHOLE-FREQUENCY SEARCH PROCESSING
   - (1): START OF SEARCH PROCESSING
   - (2): END OF SEARCH PROCESSING
FIG. 27
   - S100: ACQUISITION OF SEARCH ORDER AND FREQUENCY DATA FOR EACH COUNTRY
   - S101: LIMITED-FREQUENCY SEARCH PROCESSING FOR FIRST RANK
   - S102,S105: IS ATTACH PROCESSING SUCCEEDED?
   - S103: LIMITED-FREQUENCY SEARCH PROCESSING FOR SECOND RANK
   - S104: LIMITED-FREQUENCY SEARCH PROCESSING FOR n-TH RANK
   - S106: WHOLE-FREQUENCY SEARCH PROCESSING
   - S110: SEARCH ORDER REWRITING PROCESSING
   - (1): START OF SEARCH PROCESSING
   - (2): END OF SEARCH PROCESSING
FIG. 28
   - (1): SEARCH ORDER AND FREQUENCY INFORMATION TABLE AFTER REWRITING
   - (2): SEARCH ORDER
   - (3): COUNTRY (AREA)
   - (4): SEARCH FREQUENCY RANGE
FIG. 29
   - 1: DATA COMMUNICATION CARD TERMINAL
   - 2: PC CARD INTERFACE UNIT
   - 3: POWER SOURCE CIRCUIT
   - 4: RADIO CIRCUIT UNIT
   - 5: CONTROL UNIT
   - 6: LED LIGHT EMITTING CIRCUIT
   - 9b: FLASH MEMORY
   - 11: SEARCH FREQUENCY INFORMATION ACQUISITION PROCESSING UNIT
   - 12: SEARCH FREQUENCY DEVELOPMENT PROCESSING UNIT
   - 13: RADIO BASE STATION SEARCH PROCESSING UNIT
   - 14: COMMAND INTERPRETATION PROCESSING UNIT
   - 21: USER SETTING INFORMATION STORAGE MEMORY
   - 22: FREQUENCY INFORMATION TABLE
   - 23: SEARCH ORDER AND FREQUENCY INFORMATION TABLE
   - 30: PC (INFORMATION DEVICE)
FIG. 30
   - S100: LIMITED-FREQUENCY SEARCH PROCESSING FOR FIRST RANK
   - S102,S105,S124: IS ATTACH PROCESSING SUCCEEDED?
   - S103: LIMITED-FREQUENCY SEARCH PROCESSING FOR SECOND RANK
   - S104: LIMITED-FREQUENCY SEARCH PROCESSING FOR n-TH RANK
   - S106: WHOLE-FREQUENCY SEARCH PROCESSING
   - S120: USER SETTING INFORMATION ACQUISITION PROCESSING
   - S121: FREQUENCY DATA ACQUISITION PROCESSING
   - S122: ACQUISITION OF SEARCH ORDER AND FREQUENCY DATA FOR EACH COUNTRY
   - S123: FIXED-FREQUENCY SEARCH PROCESSING
   - (1): START OF SEARCH PROCESSING
   - (2): END OF SEARCH PROCESSING

## Claims

1. A data communication terminal connected to an information device body and used as a modem for performing communication between the information device body and a surrounding radio base station, the data communication terminal comprising:
search frequency information acquisition means for receiving search frequency setting information of a radio base station from the information of device body side;
setting data storage means for storing the search frequency setting information received by the search frequency information acquisition means;
search frequency development means for determining a frequency to be searched for based on the search frequency setting information stored by the setting data storage means; and
radio base station search means for searching for a radio base station at the frequency determined by the search frequency development means.

2. A data communication terminal according to claim 1, wherein:
the search frequency setting information comprises information on one or more fixed frequencies; and
the search frequency development means determines the search frequency based on the one or more fixed frequencies.

3. A data communication terminal according to claim 1 or 2,
wherein:
the search frequency setting information comprises information on a limited frequency range defined by a lower frequency limit and an upper frequency limit of frequencies to be searched for; and
the search frequency development means determines the search frequency based on the information on the limited frequency range.

4. A data communication terminal according to any one of claims 1 to 3, wherein:
the search frequency setting information comprises the information on the limited frequency range defined by the lower frequency limit and the upper frequency limit of the frequencies to be searched for and the information on the one or more fixed frequencies;
the search frequency development means determines the search frequency based on the information on the limited frequency range and the information on the one or more fixed frequencies; and
the radio base station search means first performs a search operation at the one or more fixed frequencies, and performs a search operation in the limited frequency range when the search processing has not been successfully performed at the one or more fixed frequencies.

5. A data communication terminal according to any one of claims 1 to 4, wherein:
the search frequency setting information comprises information on a frequency of a radio base station which is not to be searched for; and
the search frequency development means determines the search frequency by excluding the frequency which is not to be searched for.

6. A data communication terminal according to any one of claims 1 to 5, wherein:
the search frequency setting information comprises information on multiple limited frequency ranges each of which is defined by a lower frequency limit and an upper frequency limit of frequencies to be searched for and information on a search order of the multiple limited frequency ranges;
the search frequency development means determines the search frequency and a search order based on the information on the multiple limited frequency ranges and the information on the search order; and
the radio base station search means performs a search operation in the multiple limited frequency ranges in accordance with the search order.

7. A data communication terminal according to any one of claims 1 to 5, wherein:
the search frequency setting information comprises information on multiple limited frequency ranges each of which is defined by a lower frequency limit and an upper frequency limit of frequencies to be searched for, information on a search order of the multiple limited frequency ranges, and information on the one or more fixed frequencies;
the search frequency development means determines the search frequency and a search order based on the information on the search order, the multiple limited frequency ranges, and the one or more fixed frequencies; and
the radio base station search means first performs a search operation at the one or more fixed frequencies, and performs a search operation in the multiple limited frequency ranges in accordance with the search order when the search processing has not been successfully performed at the one or more fixed frequencies.

8. A data communication terminal according to claims 6 and 7, wherein search processing is sequentially performed in the multiple limited frequency ranges in accordance with the information on the search order, and, when the search processing is successfully performed at a first time, the information on the search order of the multiple limited frequency ranges is rewritten and stored such that the search order of the limited frequency range in which the search processing is successfully performed is placed at the top of the search order.

9. A data communication terminal according to any one of claims 1 to 8, wherein:
setting information on an identification condition of a country name or the like, and setting information on the identification condition and a search frequency corresponding to the identification condition are selected and used as the search frequency setting information;
the setting data storage means comprises a user setting information storage memory for storing the identification condition of a country name or the like, and a frequency information table for storing the search frequency setting information corresponding to the identification condition; and
the search frequency development means references the identification condition of a country name or the like, which is set in the user setting information storage memory, and determines the search frequency based on frequency information corresponding to the identification condition, which is stored in the frequency information table.

10. A data communication terminal according to any one of claims 1 to 9, further comprising command interpretation means for interpreting commands for updating, adding, and deleting frequency setting information, which are sent from the information device body,
wherein the frequency setting information stored in the setting data storage means is updated, added, or deleted based on a command interpretation result obtained by the command interpretation means.

11. A radio base station searching method used in a data communication terminal connected to an information device body and used as a modem for performing communication between the information device body and a surrounding radio base station, the radio base station searching method comprising:
a search frequency information acquisition procedure of receiving search frequency setting information of a radio base station from the information device body side;
a setting data storage procedure of storing the search frequency setting information received in the search frequency information acquisition procedure;
a search frequency development procedure of determining a frequency to be searched for based on the search frequency setting information stored in the setting data storage procedure; and
a radio base station search procedure of searching for a radio base station at the frequency determined in the search frequency development procedure.

12. A program for causing a computer of a data communication terminal connected to an information device body and used as a modem for performing communication between the information device body and a surrounding radio base station, to execute:
a search frequency information acquisition procedure of receiving search frequency setting information of a radio base station from the information device body side;
a setting data storage procedure of storing the search frequency setting information received in the search frequency information acquisition procedure;
a search frequency development procedure of determining a frequency to be searched for based on the search frequency setting information stored in the setting data storage procedure; and
a radio base station search procedure of searching for a radio base station at the frequency determined in the search frequency development procedure.
